(19) Europäisches Patentamt
European Patent Office
Office européen des brevets

(11) EP 3 227 371 B1

(12) **EUROPÄISCHE PATENTSCHRIFT**

(45) Veröffentlichungstag und Bekanntmachung des Hinweises auf die Patenterteilung:
**04.07.2018 Patentblatt 2018/27**

(21) Anmeldenummer: **15801776.4**

(22) Anmeldetag: **26.11.2015**

(51) Int Cl.:
***C08K 5/00*** *(2006.01)* ***C08K 5/103*** *(2006.01)*
***C08K 7/14*** *(2006.01)* ***C08K 7/24*** *(2006.01)*
***C08L 27/18*** *(2006.01)*

(86) Internationale Anmeldenummer:
**PCT/EP2015/077729**

(87) Internationale Veröffentlichungsnummer:
**WO 2016/087296 (09.06.2016 Gazette 2016/23)**

(54) **GEFÜLLTE POLYCARBONATZUSAMMENSETZUNGEN MIT VERBESSERTER FLIESSFÄHIGKEIT UND HOHER STEIFIGKEIT**

FILLED POLYCARBONATE COMPOSITIONS WITH IMPROVED FLOWABILITY AND HIGH STIFFNESS

COMPOSITIONS DE POLYCARBONATE REMPLIES À FLUIDITÉ AMÉLIORÉE ET RIGIDITÉ ÉLEVÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2014 EP 14195706**

(43) Veröffentlichungstag der Anmeldung:
**11.10.2017 Patentblatt 2017/41**

(73) Patentinhaber: **Covestro Deutschland AG**
**51373 Leverkusen (DE)**

(72) Erfinder:
- **HEUER, Helmut Werner**
**51371 Leverkusen (DE)**
- **WEHRMANN, Rolf**
**47800 Krefeld (DE)**
- **BOUMANS, Anke**
**47574 Goch (DE)**
- **ERKELENZ, Michael**
**47239 Duisburg (DE)**
- **FRANSSEN, Hans**
**47809 Krefeld (DE)**

(74) Vertreter: **Levpat**
**c/o Covestro AG**
**Gebäude 4825**
**51365 Leverkusen (DE)**

(56) Entgegenhaltungen:
**WO-A1-2013/045552**

- **DATABASE WPI Week 201054 Thomson Scientific, London, GB; AN 2010-J92595 XP002739231, & JP 2010 168543 A (SUMITOMO DOW LTD) 5. August 2010 (2010-08-05)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 227 371 B1

## Beschreibung

Die vorliegende Erfindung betrifft sowohl glasfaser- als auch carbonfaserverstärkte oder mit Carbon Nanotubes verstärkte Polycarbonatzusammensetzungen mit hoher Fließfähigkeit, ausgezeichneter Steifigkeit und gegebenenfalls verbesserten Flammschutzeigenschaften. Weiterhin betrifft die vorliegende Erfindung die Verwendung der erfindungsgemäßen Zusammensetzungen zur Herstellung von Gehäuseteilen im EE- und IT-Bereich, z.B. für Elektrogehäuse/Schaltkästen oder für Rahmen von LCD-/LED-Bildschirmen sowie für Gehäuseteile von mobilen Kommunikationsendgeräten, wie Smartphones, Tablets, Ultrabooks, Notebooks oder Laptops, aber auch Navigationsgeräte, Smartwatches oder Herzfrequenzmesser, sowie Elektroanwendungen in Dünnwand-Ausfertigungen, z. B. Haus- und Industrie-Vernetzungseinheiten und Smart Meter Gehäusebauteile.

Diese Zusammensetzungen eignen sich insbesondere für größere Bauteile, die bei einer Wandstärke von 1,5 mm die Brandschutzklassifikation UL94 V-0 erfüllen.

Aus dem Stand der Technik ist bekannt, Kunststoffen wie Polycarbonat Glasfasern, Carbonfasern oder Carbon-Nanotubes hinzuzufügen, welche die Steifigkeit verbessern. Weiterhin sind eine Vielzahl von Flammschutzmitteln bekannt, die für Polycarbonat geeignet sind. Durch die Optimierung der Eigenschaften eines Polycarbonats hinsichtlich Steifigkeit und Flammschutzeigenschaften ist jedoch gleichzeitig eine Verschlechterung von insbesondere der Fließfähigkeit verbunden.

Die WO 2013/045552 A1 beschreibt glasfasergefüllte, flammgeschützte Polycarbonate mit einem hohen Maß an Steifigkeit und gleichzeitig guter Zähigkeit. Über die Möglichkeit zur Verbesserung der Fließfähigkeit entsprechender Zusammensetzungen wird nichts gelehrt. Außerdem ist in der US 3 951 903 A der Einsatz von Carbonsäureanhydriden in glasfasergefüllten Polycarbonaten zur Verbesserung der Spannungsrissbeständigkeit beschrieben. In der EP 0 063 769 A2 wird ein Polycarbonat beschrieben, das Glasfasern und Polyanhydrid enthält und eine verbesserte Schlagzähigkeit aufweist. Eine Verbesserung der Fließfähigkeit wird nicht beschrieben.

Herkömmlich wird zur Fließverbesserung BDP (Bisphenol A-Diphosphat) verwendet, und zwar in Mengen von bis zu mehr als 10 Gew.-%, um den gewünschten Effekt zu erzielen. Dadurch wird aber die Wärmeformbeständigkeit stark herabgesetzt.

Diglycerolester werden in Zusammenhang mit transparenten, antistatischen Zusammensetzungen genannt, beispielsweise in JP2011108435 A, JP2010150457 A, JP2010150458 A. Die JP2009292962 A beschreibt spezielle Ausführungsformen, bei denen der Ester über mindestens 20 C-Atome verfügt. Die JP2011256359 A beschreibt flammgeschützte, UV-stabilisierte, antistatische Zusammensetzungen unter Verwendung von Diglycerolestern.

Eine Aufgabe der vorliegenden Erfindung war es, verstärkte Polycarbonatzusammensetzungen mit einer Kombination aus hoher Steifigkeit, hoher Fließfähigkeit und möglichst einer Flammwidrigkeit von UL94 V-0 (bei 1,5 mm Wandstärke hergestellter Formteile) sowie entsprechende Formteile bereitzustellen, welche die Nachteile der aus dem Stand der Technik bekannten Zusammensetzungen, wie z. B. unzureichendes Fließverhalten bei der Verarbeitung, nicht aufweisen.

Überraschenderweise wurde nun gefunden, dass diese Aufgabe durch eine Zusammensetzung, enthaltend

A) 20,0 Gew.-% bis 99,0 Gew.-% aromatisches Polycarbonat,

B) 0,0 Gew.-% bis 1,0 Gew.-% mindestens eines Flammschutzmittels,

C) 0,5 Gew.-% bis 50,0 Gew.-% mindestens einer Glasfaser, einer Carbonfaser und/oder Carbon-Nanotubes,

D) 0,01 Gew.-% bis 3,0 Gew.-% mindestens eines Fließhilfsmittels, ausgewählt aus der Gruppe der Diglycerolester,

E) 0,0 Gew.-% bis 5,0 Gew.-% mindestens eines Antitropfmittels,

F) 0,0 Gew.-% bis 1,0 Gew.-% mindestens eines Thermostabilisators,

G) 0,0 Gew.-% bis 10,0 Gew.-% weitere Additive,

gelöst wird.

Bevorzugt enthält die Zusammensetzung keine weiteren Komponenten, sondern die Komponenten A) bis G) ergänzen sich zu 100 Gew.-%.

Trotz hoher Anteile an Glasfasern und/oder Carbonfasern und/oder Carbon-Nanotubes und weiteren Additiven genügen überraschenderweise relativ geringe Mengen des Diglycerolesters, um die Fließfähigkeit bemerkenswert zu verbessern. Entsprechend ist der Einfluss auf die thermischen Eigenschaften, beispielsweise die Wärmeformbeständigkeit, gering.

Die Erfindung wird weiterhin gelöst durch Formteile, hergestellt aus einer solchen Zusammensetzung.

Erfindungsgemäße Zusammensetzungen mit einer Schmelze-Volumenfließrate MVR von 1 bis 30 $cm^3/10$ min, weiter bevorzugt von 7 bis 25 $cm^3/10$ min, bestimmt nach ISO 1133 (Prüftemperatur 300°C, Masse 1,2 kg), und einer Brennbarkeitsklasse UL-94 V-0 bei 1,5 mm Wandstärke und/oder einer Schmelze-Volumenfließrate MVR von 1 bis 30 $cm^3/10$ min, weiter bevorzugt von 7 bis 25 $cm^3/10$ min, bestimmt nach ISO 1133 (Prüftemperatur 300°C, Masse 1,2 kg), und im Falle von in den Zusammensetzungen enthaltenen Glasfasern einer Schlagzähigkeit nach Charpy, bestimmt nach DIN EN ISO 179 bei Raumtemperatur, von größer 35 $kJ/m^2$, werden vorzugsweise zur Herstellung von Formteilen verwendet.

Die erfindungsgemäßen Zusammensetzungen zeichnen sich durch gute mechanische Eigenschaften, insbesondere eine gute Steifigkeit, und sehr gutes rheologisches Verhalten (leicht fließend) bei gegebenenfalls verbesserter Flammwidrigkeit aus. Erfindungsgemäß bevorzugt sind solche Zusammensetzungen, die neben Füllstoffen ein Flammschutzmittel enthalten.

Die einzelnen Bestandteile der erfindungsgemäßen Zusammensetzungen sind im Folgenden noch näher erläutert:

## Komponente A

Polycarbonate im Sinne der vorliegenden Erfindung sind sowohl Homopolycarbonate als auch Copolycarbonate; die Polycarbonate können in bekannter Weise linear oder verzweigt sein. Erfindungsgemäß können auch Mischungen von Polycarbonaten verwendet werden.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die Herstellung aromatischer Polycarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich.

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha$-$\alpha$'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol,

Cumylphenol, sowie deren Mischungen.

Bevorzugte Kettenabbrecher sind die Phenole, welche ein- oder mehrfach mit $C_1$- bis $C_{30}$-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Zur Einarbeitung von Additiven wird die Komponente A bevorzugt in Form von Pulvern, Granulaten oder aus Gemischen aus Pulvern und Granulaten eingesetzt.

Beispielsweise wird bei Glasfaser-gefüllten Zusammensetzungen vorzugsweise eine Mischung aus den aromatischen Polycarbonaten A1 und A2 eingesetzt mit den folgenden Eigenschaften:
Die Menge des aromatischen Polycarbonats A1 beträgt, bezogen auf die Gesamtmenge an Polycarbonat, 25,0 bis 85,0 Gew.-%, bevorzugt 28,0 bis 84,0 Gew.-%, besonders bevorzugt 30,0 bis 83,0 Gew.-%, wobei dieses aromatische Polycarbonat auf Basis Bisphenol A mit einer bevorzugten Schmelze-Volumenfließrate MVR von 7 bis 15 $cm^3$/10 min, weiter bevorzugt mit einer Schmelze-Volumenfließrate MVR von 8 bis 12 $cm^3$/10 min und besonders bevorzugt mit einer Schmelze-Volumenfließrate MVR von 8 bis 11 $cm^3$/10 min, bestimmt gemäß ISO 1133 (Prüftemperatur 300°C, Masse 1,2 kg), ist.

Die Menge des pulverförmigen aromatischen Polycarbonats A2 beträgt, bezogen auf die Gesamtmenge an Polycarbonat, 3,0 bis 12,0 Gew.-%, bevorzugt 4,0 bis 11,0 Gew.-%, besonders bevorzugt 3,0 bis 10,0 Gew.-%, wobei dieses aromatische Polycarbonat bevorzugt auf Basis von Bisphenol A mit einer bevorzugten Schmelze-Volumenfließrate MVR von 3 bis 8 $cm^3$/10 min, weiter bevorzugt mit einer Schmelze-Volumenfließrate MVR von 4 bis 7 $cm^3$/10 min, und besonders bevorzugt mit einer Schmelze-Volumenfließrate MVR von 6 $cm^3$/10 min, bestimmt gemäß ISO 1133 (Prüftemperatur 300°C, Masse 1,2 kg), ist.

## Komponente B

Die Menge an Flammschutzmittel in den erfindungsgemäßen Zusammensetzungen beträgt bevorzugt 0,001 bis 1,0 Gew.-%, weiter bevorzugt 0,05 bis 0,80 Gew.-%, besonders bevorzugt 0,10 bis 0,60 Gew.-%, ganz besonders bevorzugt 0,10 bis 0,40 Gew.-%.

Geeignete Flammschutzmittel im Sinne der vorliegenden Erfindung sind Alkali- bzw. Erdalkalisalze von aliphatischen bzw. aromatischen Sulfonsäure- und Sulfonamidderivaten.

Salze, die in den erfindungsgemäßen Zusammensetzungen verwendet werden können, sind: Natriumperfluorbutansulfat, Kaliumperfluorbutansulfat, Natriumperfluormethansulfonat, Kaliumperfluormethansulfonat, Natriumperfluoroctansulfat, Kaliumperfluoroctansulfat, Natrium-2,5-dichlorbenzolsulfat, Kalium-2,5-dichlorbenzolsulfat, Natrium-2,4,5-trichlorbenzolsulfat, Kalium-2,4,5-trichlorbenzolsulfat, Natriummethylphosphonat, Kaliummethylphosphonat, Natrium-(2-phenyl-ethylen)-phosphonat, Kalium-(2-phenyl-ethylen)-phosphonat, Natriumpentachlorbenzoat, Kaliumpentachlorbenzoat, Natrium-2,4,6-trichlorbenzoat, Kalium-2,4,6-trichlorbenzoat, Natrium-2,4-dichlorbenzoat, Kalium-2,4-dichlorbenzoat, Lithiumphenylphosphonat, Natriumdiphenylsulfonsulfonat, Kaliumdiphenylsulfonsulfonat, Natrium-2-formylbenzolsulfonat, Kalium-2-formylbenzolsulfonat, Natrium-(N-benzolsulfonyl)-benzolsulfonamid, Kalium-(N-benzolsulfonyl)-benzolsulfonamid, Trinatriumhexafluoroaluminat, Trikaliumhexafluoroaluminat, Dinatriumhexafluorotitanat, Dikaliumhexafluorotitanat, Dinatriumhexafluorosilikat, Dikaliumhexafluorosilikat, Dinatriumhexafluorozirkonat, Dikaliumhexafluorozirkonat, Natriumpyrophosphat, Kaliumpyrophosphat, Natriummetaphosphat, Kaliummetaphosphat, Natriumtetrafluoroborat, Kaliumtetrafluoroborat, Natriumhexafluorophosphat, Kaliumhexafluorophosphat, Natrium- oder Kalium-

oder Lithiumphosphat, Natriumnonafluor-1-butansulfonat, Kaliumnonafluor-1-butansulfonat oder deren Mischungen.

Bevorzugt werden Natriumperfluorbutansulfat, Kaliumperfluorbutansulfat, Natriumperfluoroctansulfat, Kaliumperfluoroctansulfat, Natriumdiphenylsulfonsulfonat, Kaliumdiphenylsulfonsulfonat, Natrium-2,4,6-trichlorbenzoat, Kalium-2,4,6-trichlorbenzoat eingesetzt. Ganz besonders bevorzugt sind Kaliumnonafluor-1-butansulfonat oder Natriumdiphenylsulfonsulfonat oder Kaliumdiphenylsulfonsulfonat. Kaliumnonafluor-1-butansulfonat ist u.a. als Bayowet®C4 (Firma Lanxess, Leverkusen, Deutschland, CAS-Nr. 29420-49-3), RM64 (Firma Miteni, Italien) oder als 3M™ Perfluorobutansulfonylfluorid FC-51 (Firma 3M, USA) kommerziell erhältlich. Ebenfalls sind Mischungen der genannten Salze geeignet.

## Komponente C

Erfindungsgemäße Zusammensetzungen enthalten 0,50 bis 50,0 Gew.-% Glasfasern, Carbonfasern, und/oder Carbon-Nanotubes, bevorzugt 0,50 bis 45,0 Gew.-%, insbesondere bevorzugt 1,0 bis 38,0 Gew.-%, weiter bevorzugt 1,0 bis 35,0 Gew.-%.

### Glasfasern:

Die Glasfasern bestehen aus einer Glaszusammensetzung, ausgewählt aus der Gruppe der M-, E-, A-, S-, R-, AR-, ECR-, D-, Q- oder C-Gläser, wobei E-, S- oder C-Glas bevorzugt sind.

Die Glaszusammensetzung wird bevorzugt in Form von Glasmassivkugeln, Glashohlkugeln, Glasperlen, Glasflakes, Glasbruch sowie Glasfasern eingesetzt, wobei die Glasfasern weiter bevorzugt sind.

Die Glasfasern können in Form von Endlosfasern (Rowings), Schnittglasfasern, Mahlfasern, Glasfasergeweben oder Mischungen der vorgenannten Formen eingesetzt werden, wobei die Schnittglasfasern sowie die Mahlfasern bevorzugt eingesetzt werden.

Besonders bevorzugt werden Schnittglasfasern eingesetzt.

Die bevorzugte Faserlänge der Schnittglasfasern beträgt vor der Compoundierung 0,5 bis 10 mm, weiter bevorzugt 1,0 bis 8 mm, ganz besonders bevorzugt 1,5 bis 6 mm.

Schnittglasfasern können mit unterschiedlichen Querschnitten eingesetzt werden. Bevorzugt werden runde, eliptische, ovale, 8-förmige und flache Querschnitte eingesetzt, wobei die runden, ovalen sowie flachen Querschnitte besonders bevorzugt sind.

Der Durchmesser von Rundfasern beträgt bevorzugt 5 bis 25 μm, weiter bevorzugt 6 bis 20 μm, besonders bevorzugt 7 bis 17 μm.

Bevorzugte Flach- und Ovalglasfasern weisen ein Querschnittverhältnis aus Höhe zu Breite von ca. 1,0 : 1,2 bis 1,0 : 8,0, bevorzugt 1,0 : 1,5 bis 1,0 : 6,0, besonders bevorzugt 1,0 : 2,0 bis 1,0 : 4,0 auf.

Die Flach- und Ovalglasfasern weisen bevorzugt eine durchschnittliche Faserhöhe von 4 μm bis 17μm, weiter bevorzugt von 6 μm bis 12 μm und besonders bevorzugt 6 μm bis 8 μm sowie eine durchschnittliche Faserbreite von 12 μm bis 30 μm, weiter bevorzugt 14 μm bis 28 μm und besonders bevorzugt 16 μm bis 26 μm auf.

Die Glasfasern können mit einer Glasschlichte an der Oberfläche der Glasfaser modifiziert sein. Bevorzugte Glasschlichten sind Epoxy-modifizierte, Polyurethan-modifizierte und nichtmodifizierte Silanverbindungen sowie Mischungen der vorgenannten Silanverbindungen.

Die Glasfasern können auch nicht mit einer Glasschlichte modifiziert sein.

Die verwendeten Glasfasern zeichnen sich dadurch aus, dass die Auswahl der Faser nicht durch die Wechselwirkungscharakteristik der Faser mit der Polycarbonatmatrix beschränkt ist.

Sowohl für eine starke Anbindung an die Polymermatrix als auch bei einer nicht-anbindenden Faser zeigt sich eine Verbesserung der erfindungsgemäßen Eigenschaften der Zusammensetzungen.

Eine Anbindung der Glasfaser an die Polymermatrix ist an den Tieftemperaturbruchoberflächen bei rasterelektronenmikroskopischen Aufnahmen zu erkennen, wobei die größte Anzahl der gebrochenen Glasfasern auf derselben Höhe wie die Matrix gebrochen sind und nur vereinzelt Glasfasern aus der Matrix herausstehen. Rasterelektronenmikroskopische Aufnahmen zeigen für den umgekehrten Fall der nicht-anbindenden Charakteristik, dass die Glasfasern im Tieftemperaturbruch aus der Matrix stark herausstehen oder vollständig herausgeglitten sind.

Sofern Glasfasern enthalten sind, sind besonders bevorzugt 10 bis 35 Gew.-%, ganz besonders bevorzugt 10 bis 30 Gew.-% Glasfasern in der Zusammensetzung enthalten.

### Carbonfasern:

Carbonfasern werden industriell aus Vorstufen wie z. B. Polyacrylfasern durch Pyrolyse (Carbonisierung) gewonnen. Man unterscheidet zwischen Filamentgarn und Kurzfasern.

In den erfindungsgemäßen Zusammensetzungen werden bevorzugt Kurzfasern eingesetzt.

Die Länge der geschnittenen Fasern liegt bevorzugt zwischen 3 mm und 125 mm. Besonders bevorzugt werden Fasern der Länge 3 mm bis 25 mm eingesetzt.

Neben Fasern mit rundem Querschnitt sind auch Fasern mit kubischer Dimension (plättchenförmig) einsetzbar. Geeignete Abmessungen sind beispielsweise 2 mm x 4 mm x 6 mm.

Neben den geschnittenen Fasern sind auch gemahlene Carbonfasern einsetzbar. Bevorzugte gemahlene Carbonfasern weisen Längen von 50 μm bis 150 μm auf.

Die Carbonfasern sind gegebenenfalls mit organischen Schlichten gecoated, um besondere Anbindungen an die Polymermatrix zu ermöglichen.

Kurzschnittfasern und gemahlene Carbonfasern werden den polymeren Basismaterialien üblicherweise durch Compoundierung zugesetzt.

Mit Hilfe spezieller technischer Verfahren wird Kohlenstoff in feinsten Fäden angeordnet. Diese Filamente besitzen üblicherweise einen Durchmesser von 3 bis 10 μm. Aus den Filamenten können auch Rovings, Gewebe, Vliese, Bänder, Schläuche oder Ähnliches hergestellt werden.

Sofern die Zusammensetzungen Carbonfasern enthalten, sind bevorzugt 10 bis 30 Gew.-%, weiter bevorzugt 10 bis 20 Gew.-%, noch weiter bevorzugt 12 bis 20 Gew.-% Carbonfasern enthalten.

Carbon-Nanotubes

Kohlenstoffnanoröhrchen, auch CNT genannt, im Sinne der Erfindung sind alle einwandigen oder mehrwandigen Kohlenstoffnanoröhrchen vom Zylinder-Typ, Scroll-Typ oder mit zwiebelartiger Struktur. Bevorzugt werden mehrwandige Kohlenstoffnanoröhrchen vom Zylinder-Typ, Scroll-Typ oder deren Mischungen eingesetzt.

Die Kohlenstoffnanoröhrchen werden vorzugsweise in einer Menge von 0,1 bis 10 Gew.-%, besonders bevorzugt von 0,5 bis 8 Gew.-%, ganz besonders bevorzugt von 0,75 bis 6 Gew.-%, und insbesondere bevorzugt von 1 bis 5 Gew.-% (bezogen auf das Gesamtgewicht der Komponenten A, B, C und D) eingesetzt. In Masterbatches ist die Konzentration der Kohlenstoffnanoröhrchen gegebenenfalls größer und kann bis zu 80 Gew.-% betragen.

Besonders bevorzugt werden Kohlenstoffnanoröhrchen mit einem Verhältnis von Länge zu Außendurchmesser von größer 5, bevorzugt größer 40 verwendet.

Die Kohlenstoffnanoröhrchen werden besonders bevorzugt in Form von Agglomeraten eingesetzt, wobei die Agglomerate insbesondere einen mittleren Durchmesser im Bereich von 0,01 bis 5 mm, bevorzugt 0,05 bis 2 mm, besonders bevorzugt 0,1 - 1 mm haben.

Die einzusetzenden Kohlenstoffnanoröhrchen weisen besonders bevorzugt im Wesentlichen einen mittleren Durchmesser von 3 bis 100 nm, bevorzugt 5 bis 80 nm, besonders bevorzugt 6 bis 60 nm auf.

**Komponente D**

Die verwendeten Fließhilfsmittel D sind Ester von Carbonsäuren mit Diglycerol. Dabei sind Ester auf Basis verschiedener Carbonsäuren geeignet. Auch können unterschiedliche Isomere von Diglycerol Basis für die Ester bilden. Neben Monoestern können auch Mehrfachester von Diglycerol eingesetzt werden. Anstelle von Reinverbindungen können auch Gemische verwendet werden.

Isomere von Diglycerol, welche die Basis für die erfindungsgemäß eingesetzten Diglycerolester bilden, sind die folgenden:

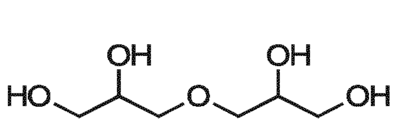

α,α-Diglycerol

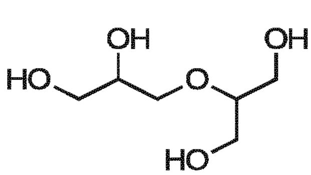

α,β-Diglycerol

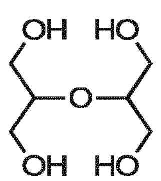

β,β-Diglycerol

Für die erfindungsgemäß verwendeten Diglycerolester können solche Isomere dieser Formeln eingesetzt werden, die einfach oder mehrfach verestert sind. Als Fließhilfsmittel einsetzbare Gemische bestehen aus den Diglyceroledukten sowie daraus abgeleiteten Esterendprodukten, beispielweise mit den Molekulargewichten 348 g/mol (Monolaurylester) oder 530 g/mol (Dilaurylester).

Die erfindungsgemäß in der Zusammensetzung enthaltenen Diglycerolester leiten sich vorzugsweise von gesättigten oder ungesättigten Monocarbonsäuren mit einer Kettenlänge von 6 bis 30 C-Atomen ab. Geeignete Monocarbonsäuren sind beispielsweise Caprylsäure ($C_7H_{15}COOH$, Octansäure), Caprinsäure ($C_9H_{19}COOH$, Decansäure), Laurinsäure ($C_{11}H_{23}COOH$, Dodecansäure), Myristinsäure ($C_{13}H_{27}COOH$, Tetradecansäure), Palmitinsäure ($C_{15}H_{31}COOH$, Hexadecansäure), Margarinsäure ($C_{16}H_{33}COOH$, Heptadecansäure), Stearinsäure ($C_{17}H_{35}COOH$, Octadecansäure), Arachinsäure ($C_{19}H_{39}COOH$, Eicosansäure), Behensäure ($C_{21}H_{43}COOH$, Docosansäure), Lignocerinsäure ($C_{23}H_{47}COOH$, Tetracosansäure), Palmitoleinsäure ($C_{15}H_{29}COOH$, (9Z)-Hexadeca-9-ensäure), Petroselinsäure ($C_{17}H_{33}COOH$, (6Z)-Octadeca-6-ensäure), Elaidinsäure ($C_{17}H_{33}COOH$, (9E)-Octadeca-9-ensäure), Linolsäure ($C_{17}H_{31}COOH$, (9Z,12Z)-Octadeca-9,12-diensäure), alpha- oder gamma-Linolensäure ($C_{17}H_{29}COOH$, (9Z,12Z,15Z)-Octadeca-9,12,15-triensäure und (6Z,9Z,12Z)-Octadeca-6,9,12-triensäure), Arachidonsäure ($C_{19}H_{31}COOH$, (5Z,8Z,11Z,14Z)-Eicosa-5,8,11,14-tetraensäure), Timnodonsäure ($C_{19}H_{29}COOH$, (5Z,8Z,11Z,14Z,17Z)-Eicosa-5,8,11,14,17-pentaensäure) und Cervonsäure ($C_{21}H_{31}COOH$, (4Z,7Z,10Z,13Z,16Z,19Z)-Docosa-4,7,10,13,16,19-hexaensäure). Besonders bevorzugt sind Laurinsäure, Palmitinsäure und/oder Stearinsäure.

Als Diglycerolester ist besonders bevorzugt mindestens ein Ester der Formel (I)

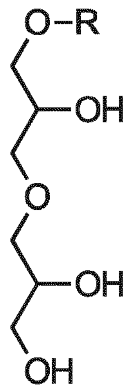
(I)

mit R = $COC_nH_{2n+1}$ und/oder R = COR',
wobei n eine ganze Zahl ist und wobei R' ein verzweigter Alkylrest oder ein verzweigter oder unverzweigter Alkenylrest ist und $C_nH_{2n+1}$ ein aliphatischer, gesättigter linearer Alkylrest ist,
enthalten.

Dabei ist n bevorzugt eine ganze Zahl von 6-24, so dass $C_nH_{2n+1}$ beispielsweise n-Hexyl, n-Heptyl, n-Octyl, n-Nonyl, n-Decyl, n-Dodecyl, n-Tridecyl, n-Tetradecyl, n-Hexadecyl oder n-Octadecyl ist. Weiter bevorzugt ist n = 8 bis 18, besonders bevorzugt 10 bis 16, ganz besonders bevorzugt 12 (Diglycerolmonolaurat-Isomer mit dem Molekulargewicht 348 g/mol, welches als Hauptprodukt in einem Gemisch besonders bevorzugt ist). Die vorgenannten Estergruppierungen liegen erfindungsgemäß bevorzugt auch bei den anderen Isomeren des Diglycerols vor.

Es kann sich demzufolge auch um ein Gemisch verschiedener Diglycerolester handeln.

Bevorzugt eingesetzte Diglycerolester weisen einen HLB-Wert von mindestens 6, besonders bevorzugt 6 bis 12 auf, wobei unter dem HLB-Wert die sog. "hydrophilic-lipophilic balance" verstanden wird, die gemäß der Methode nach Griffin wie folgt berechnet wird:

$$HLB = 20 \times (1 - M_{lipophil}/M),$$

wobei $M_{lipophil}$ die Molmasse des lipophilen Anteils des Diglycerolesters ist und M die Molmasse des Diglycerolesters.

Die Menge an Diglycerolester beträgt 0,01 bis 3,0 Gew.-%, bevorzugt 0,10 bis 2,0 Gew.-%, besonders bevorzugt 0,15 bis 1,50 Gew.-% und ganz besonders bevorzugt 0,20 bis 1,0 Gew.-%.

## Komponente E

Bevorzugt enthalten die erfindungsgemäßen Zusammensetzungen ein Antitropfmittel. Die Menge an Antitropfmittel (Antidrippingmittel) beträgt bevorzugt 0,05 bis 5,0 Gew.-%, weiter bevorzugt 0,10 Gew.-% bis 2,0 Gew.-%, besonders bevorzugt 0,10 Gew.-% bis 1,0 Gew.-% mindestens eines Antitropfmittels.

Als Antitropfmittel wird den Zusammensetzungen bevorzugt Polytetrafluorethylen (PTFE) zugefügt. PTFE ist in diversen Produktqualitäten kommerziell verfügbar. Hierzu zählen Hostaflon® TF2021 oder aber PTFE-Blends wie Metablen® A-3800 (ca. 40 Gew.-% PTFE, CAS 9002-84-0, und ca. 60 Gew.-% Methylmethacrylat/Butylacrylat Copolymer, CAS 25852-37-3, von Mitsubishi-Rayon) oder Blendex® B449 (ca. 50 Gew.-% PTFE und ca. 50 Gew.-% SAN [aus 80 Gew.-% Styrol und 20 Gew.-% Acrylnitril]) der Firma Chemtura. Bevorzugt wird Blendex® B449 verwendet.

**Komponente F**

Als Thermostabilisatoren eignen sich bevorzugt Triphenylphosphin, Tris-(2,4-di-tert-butylphenyl)phosphit (Irgafos® 168), Tetrakis-(2,4-di-tert-butylphenyl)-[1,1-biphenyl]-4,4'-diylbisphosphonit, Trisisooctylphosphat, Octadecyl-3-(3,5-di-tert-butyl-4-hydroxyphenyl)-propionat (Irganox® 1076), Bis-(2,4-dicumylphenyl)-pentaerythritoldiphosphit (Doverphos® S-9228), Bis-(2,6-di-tert-butyl-4-methylphenyl)-pentaerythritoldiphosphit (ADK STAB PEP-36). Sie werden allein oder im Gemisch (z. B. Irganox® B900 (Gemisch aus Irgafos® 168 und Irganox® 1076 im Verhältnis 1:3) oder Doverphos® S-9228 mit Irganox® B900 bzw. Irganox® 1076) eingesetzt. Die Thermostabilisatoren werden bevorzugt in Mengen von 0,003 bis 0,2 Gew.-% eingesetzt.

**Komponente G**

Zusätzlich sind optional bis zu 10,0 Gew.-%, bevorzugt 0,10 bis 8,0 Gew.-%, besonders bevorzugt 0,2 bis 3,0 Gew.-% sonstige übliche Additive ("weitere Additive") enthalten. Die Gruppe der weiteren Additive umfasst keine Flammschutzmittel, keine Antitropfmittel und keine Thermostabilisatoren, da diese bereits als Komponenten B, E und F beschrieben sind. Auch umfasst die Gruppe der weiteren Additive keine Glasfasern, Carbonfasern sowie Carbon-Nanotubes, da diese bereits von der Gruppe C erfasst sind. "Weitere Additive" sind auch keine Fließhilfsmittel aus der Gruppe der Diglycerolester, da diese bereits als Komponente D erfasst sind.

Solche Additive, wie sie üblicherweise bei Polycarbonaten zugesetzt werden, sind insbesondere die in EP-A 0 839 623, WO-A 96/15102, EP-A 0 500 496 oder "Plastics Additives Handbook", Hans Zweifel, 5th Edition 2000, Hanser Verlag, München beschriebenen Antioxidantien, UV-Absorber, IR-Absorber, Antistatika, optischen Aufheller, Lichtstreumittel, Farbmittel wie Pigmente, auch anorganischen Pigmente, Ruß und/oder Farbstoffe, anorganischen Füllstoffe wie Titandioxid oder Bariumsulfat in den für Polycarbonat üblichen Mengen. Diese Additive können einzeln oder auch im Gemisch zugesetzt werden.

Bevorzugte Additive sind spezielle UV-Stabilisatoren, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, BASF, Ludwigshafen), 2-(2'-Hydroxy-5'-(tert.-octyl)-phenyl)-benzotriazol (Tinuvin® 329, BASF, Ludwigshafen),), Bis-(3-(2H-benztriazolyl)-2-hydroxy-5-tert.-octyl)methan (Tinuvin® 360, BASF, Ludwigshafen), 2-(4,6-Diphenyl-1,3,5-triazin-2-yl)-5-(hexyloxy)-phenol (Tinuvin® 1577, BASF, Ludwigshafen), sowie Benzophenone wie 2,4-Dihydroxybenzophenon (Chimasorb® 22 , BASF, Ludwigshafen) und 2-Hydroxy-4-(octyloxy)-benzophenon (Chimassorb® 81, BASF, Ludwigshafen), 2,2-Bis[[(2-cyano-1-oxo-3,3-diphenyl-2-propenyl)oxy]-methyl]-1,3-propandiylester (9CI) (Uvinul® 3030, BASF AG Ludwigshafen), 2-[2-Hydroxy-4-(2-ethylhexyl)oxy]phenyl-4,6-di(4-phenyl)phenyl-1,3,5-triazine (Tinuvin® 1600, BASF, Ludwigshafen), Tetraethyl-2,2'-(1,4-phenylen-dimethyliden)-bismalonat (Hostavin® B-Cap, Clariant AG) oder N-(2-Ethoxyphenyl)-N'-(2-ethylphenyl)-ethandiamid (Tinuvin® 312, CAS-Nr. 23949-66-8, BASF, Ludwigshafen).

Besonders bevorzugte spezielle UV-Stabilisatoren sind Tinuvin® 360, Tinuvin® 329 und/oder Tinuvin® 312, ganz besonders bevorzugt sind Tinuvin® 329 und Tinuvin® 312.

Es können auch Mischungen dieser Ultraviolett-Absorber eingesetzt werden.

Bevorzugt enthält die Zusammensetzung Ultraviolett-Absorber in einer Menge bis 0,8 Gew.-%, bevorzugt 0,05 Gew.-% bis 0,5 Gew.-% , weiter bevorzugt 0,1 Gew.-% bis 0,4 Gew.-%, bezogen auf die Gesamtzusammensetzung.

Bevorzugt ist die Zusammensetzung frei von zusätzlichen Entformungsmitteln.

Besonders bevorzugt ist mindestens ein Thermostabilisator (Komponente F) und gegebenenfalls als weiteres Additiv ein UV-Absorber enthalten, wenn als Füllstoff Glasfasern eingesetzt werden.

Die Herstellung der erfindungsgemäßen Polymer-Zusammensetzungen, enthaltend die Komponenten A bis D, ggf. ohne B, und ggf. E bis G, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten B bis G verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten B bis G der erfindungsgemäßen Zusammensetzung durch bekannte Verfahren oder als Masterbatch in das Polycarbonat eingebracht werden.

Die Verwendung von Masterbatchen ist zum Einbringen der Komponenten B bis G, einzeln oder in Mischung, bevorzugt.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die Herstellung der Kunststoffformteile erfolgt vorzugsweise durch Spritzguss.

Erfindungsgemäße Zusammensetzungen in Form von Polycarbonatzusammensetzungen sind zur Herstellung von Mehrschichtsystemen geeignet. Hierbei wird die erfindungsgemäße Polycarbonatzusammensetzung in einer oder mehreren Schicht(en) auf einen geformten Gegenstand aus einem Kunststoff aufgebracht. Das Aufbringen kann zugleich mit oder unmittelbar nach der Formgebung des Formkörpers geschehen, zum Beispiel durch Hinterspritzen einer Folie, Coextrusion oder Mehrkomponentenspritzguss. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

Erfindungsgemäße Zusammensetzungen sind zur Herstellung von Rahmenbauteilen im EE (Elektro/Elektronik)- und IT-Bereich geeignet, insbesondere für Anwendungen, die hohe Anforderungen an den Flammschutz stellen. Solche Anwendungen sind beispielsweise Bildschirme oder Gehäuse, etwa für Ultrabooks oder Rahmen für LED-Display-Technologien, z.B. OLED-Displays oder LCD-Displays oder auch für E-Ink-Geräte. Weitere Anwendungsfelder sind Gehäuseteile von mobilen Kommunikationsendgeräten, wie Smartphones, Tablets, Ultrabooks, Notebooks oder Laptops, aber auch Navigationsgeräte, Smartwatches oder Herzfrequenzmesser, sowie Elektroanwendungen in Dünnwand-Ausfertigungen, z. B. Haus- und Industrie-Vernetzungseinheiten und Smart Meter Gehäusebauteile.

Bevorzugt werden erfindungsgemäße Zusammensetzungen für die Herstellung von Ultrabooks eingesetzt.

Besonders geeignet sind erfindungsgemäße Zusammensetzungen zur Herstellung von dünnwandigen Formteilen der Dicke 0,1 bis 3 mm für den Bereich Elektrik/Elektronik oder den IT-Bereich mit einer Brennbarkeitsklasse UL-94 V-0 bei 1,5 mm Wandstärke.

Besonders bevorzugte erfindungsgemäße Zusammensetzungen sind solche, bestehend aus

A) 20 Gew.-% bis 99,0 Gew.-% aromatisches Polycarbonat,

B) 0,0 Gew.-% bis 1,0 Gew.-% mindestens eines Flammschutzmittels, ausgewählt aus der Gruppe Natriumperfluorbutansulfat, Kaliumperfluorbutansulfat, Natriumperfluormethansulfonat, Kaliumperfluormethansulfonat, Natriumperfluoroctansulfat, Kaliumperfluoroctansulfat, Natrium-2,5-dichlorbenzolsulfat, Kalium-2,5-dichlorbenzolsulfat, Natrium-2,4,5-trichlorbenzolsulfat, Kalium-2,4,5-trichlorbenzolsulfat, Natriummethylphosphonat, Kaliummethylphosphonat, Natrium-(2-phenyl-ethylen)-phosphonat, Kalium-(2-phenyl-ethylen)-phosphonat, Natriumpentachlorbenzoat, Kaliumpentachlorbenzoat, Natrium-2,4,6-trichlorbenzoat, Kalium-2,4,6-trichlorbenzoat, Natrium-2,4-dichlorbenzoat, Kalium-2,4-dichlorbenzoat, Lithiumphenylphosphonat, Natriumdiphenylsulfonsulfonat, Kaliumdiphenylsulfonsulfonat, Natrium-2-formylbenzolsulfonat, Kalium-2-formylbenzolsulfonat, Natrium-(N-benzolsulfonyl)-benzolsulfonamid, Kalium-(N-benzolsulfonyl)-benzolsulfonamid, Trinatriumhexafluoroaluminat, Trikaliumhexafluoroaluminat, Dinatriumhexafluorotitanat, Dikaliumhexafluorotitanat, Dinatriumhexafluorosilikat, Dikaliumhexafluorosilikat, Dinatriumhexafluorozirkonat, Dikaliumhexafluorozirkonat, Natriumpyrophosphat, Kaliumpyrophosphat, Natriummetaphosphat, Kaliummetaphosphat, Natriumtetrafluoroborat, Kaliumtetrafluoroborat, Natriumhexafluorophosphat, Kaliumhexafluorophosphat, Natrium- oder Kalium- oder Lithiumphosphat, Natriwnnonafluor-1-butansulfonat, Kaliumnonafluor-1-butansulfonat oder deren Mischungen.

C) 0,5 Gew.-% bis 50,0 Gew.-% mindestens einer Glasfaser, einer Carbonfaser und/oder Carbon-Nanotubes,

D) 0,01 Gew.-% bis 3,0 Gew.-% mindestens eines Fließhilfsmittels, ausgewählt aus der Gruppe der Diglycerolester, bevorzugt einer der Formel (I), ganz besonders bevorzugt Diglycerolmonolaurylester,

E) 0,0 Gew.-% bis 5,0 Gew.-% mindestens eines Antitropfmittels,

F) 0,0 Gew.-% bis 1,0 Gew.-% mindestens eines Thermostabilisators,

G) 0,0 Gew.-% bis 10,0 Gew.-% weitere Additive, ausgewählt aus der Gruppe der UV-Absorber, IR-Absorber, Farbmittel, Ruß und/oder anorganischen Füllstoffe.

Diese Zusammensetzungen enthalten ganz besonders bevorzugt mindestens eine Glasfaser, wobei noch weiter bevorzugt als Verstärkungsfaser nur Glasfaser enthalten ist.

Alternativ ganz besonders bevorzugt enthalten diese Zusammensetzungen eine Carbonfaser, wobei noch weiter bevorzugt als Verstärkungsfaser nur Carbonfaser enthalten ist.

## Beispiele

### 1. Beschreibung der Rohstoffe und Prüfmethoden

Die erfindungsgemäßen Polycarbonatzusammensetzungen werden auf üblichen Maschinen, wie beispielsweise Mehrwellenextrudern, durch Compoundierung, gegebenenfalls unter Zugabe von Additiven und anderen Zuschlagstoffen, bei Temperaturen zwischen 280°C und 360°C hergestellt.

Die erfindungsgemäßen Compounds zu den folgenden Beispielen wurden auf einem Extruder ZE 25 der Fa. Berstorff mit einem Durchsatz von 10 kg/Std. hergestellt. Die Schmelzetemperatur betrug 275 °C.

Es wurden als Polycarbonatbasis A Mischungen aus den Komponenten A-1, A-2, A-3, A-4, A-6 bzw. A-7 eingesetzt.

Komponente A-1: Lineares Polycarbonat auf Basis von Bisphenol A mit einer Schmelze-Volumenfließrate MVR von 9,5 $cm^3$/10 min (gemäß ISO 1133, bei einer Prüftemperatur 300°C und 1,2 kg Belastung).

Komponente A-2: Lineares Polycarbonat in Pulverform auf Basis von Bisphenol A mit einer Schmelze-Volumenfließrate MVR von 6 $cm^3$/10 min (gemäß ISO 1133, bei einer Prüftemperatur von 300°C und 1,2 kg Belastung).

Komponente A-3: Lineares Polycarbonat auf Basis von Bisphenol A mit einer Schmelze-Volumenfließrate MVR von 12,5 $cm^3$/10 min (gemäß ISO 1133, bei einer Prüftemperatur 300°C und 1,2 kg Belastung).

Komponente A-4: Lineares Polycarbonat auf Basis von Bisphenol A mit einer Schmelze-Volumenfließrate MVR von 6 $cm^3$/10 min (gemäß ISO 1133, bei einer Prüftemperatur 300°C und 1,2 kg Belastung).

Komponente A-6: Pulver eines linearen Polycarbonates auf Basis von Bisphenol A mit einer Schmelze-Volumenfließrate MVR von 19 $cm^3$/10 min (gemäß ISO 1133, bei einer Prüftemperatur 300°C und 1,2 kg Belastung).

Komponente A-7: Lineares Polycarbonat auf Basis von Bisphenol A mit einer Schmelze-Volumenfließrate MVR von 19 $cm^3$/10 min (gemäß ISO 1133, bei einer Prüftemperatur 300°C und 1,2 kg Belastung).

Komponente B: Kaliumperfluor-1-butansulfonat, kommerziell erhältlich als Bayowet® C4 der Firma Lanxess, Leverkusen, Deutschland, CAS-Nr. 29420-49-3.

Komponente C-1: CS108F-14P, geschnittene Kurzglasfasern (nicht anbindend) der Firma 3B mit einem durchschnittlichen Faserdurchmesser von 14 µm und einer durchschnittlichen Faserlänge von 4,0 mm vor der Compoundierung.

Komponente C-2: CS 7942, geschnittene Kurzglasfasern (anbindend) der Firma Lanxess AG mit einem durchschnittlichen Faserdurchmesser von 14 µm und einer durchschnittlichen Faserlänge von 4,5 mm vor der Compoundierung.

Komponente C-3: Carbonfaser CF Tenax A HT C493, geschnittene Kohlenstoff-Kurzfaser der Firma Toho Tenax Europe GmbH Germany mit thermoplastischem Präparationsauftrag und mit einer durchschnittlichen Schnittlänge von 6 mm vor der Compoundierung.

Komponente C-4: CNT; Baytubes C150 HP, Agglomerate von Multi-Wall Nanoröhrchen mit niedrigem Außendurchmesser, enger Durchmesserverteilung und ultra-hoch Längen-zu Durchmesser-Verhältnis. Anzahl Wände: 3-15 / Außendurchmesser: 13-16 nm / Außendurchmesserverteilung: 5-20 nm / Länge: 1 bis >10 µm / Innendurchmesser: 4 nm / Innendurchmesserverteilung: 2-6 nm.

Komponente C-5: Carbonfaser AC 3101; geschnittene Kohlenstoff-Kurzfaser der Firma Dow Aksa (Türkei) mit einer durchschnittlichen Länge von 6 mm vor der Compoundierung.

Komponente C-6: Carbonfaser Tairyfil CS2516, geschnittene Kohlenstoff-Kurzfaser der Firma Formosa Plastic Corporation Taiwan mit einer durchschnittlichen Länge von 6 mm vor der Compoundierung.

Komponente C-7: Glasfaser CS Special 7968, geschnittene Kurzglasfasern der Firma Lanxess AG mit einem durchschnittlichen Faserdurchmesser von 11 µm und einer durchschnittlichen Faserlänge von 4,5 mm vor der Compoundierung.

Komponente C-8: Glasfaser CSG 3PA-830, geschnittene Flachglasfaser der Firma Nittobo mit einem Dicken-/Längenverhältnis von 1:4.

Komponente C-9: Glasfaser MF7980, gemahlene Glasfaser der Firma Lanxess. Unbeschlichtetes E-Glas mit

einer Faserdicke von 14 μm und einer mittleren Faserlänge von 190 μm.

Komponente D: Poem DL-100 (Diglycerolmonolaurat) der Fa. Riken Vitamin als Fließhilfsmittel.

Komponente E: Polytetrafluorethylen (Blendex® B449 (ca. 50 Gew.-% PTFE und ca. 50 Gew.-% SAN [aus 80 Gew.-% Styrol und 20 Gew.-% Acrylnitril] der Firma Chemtura).

Komponente F: Triisooctylphosphat (TOF) der Firma Lanxess AG.

Komponente G-1: Glycerinmonostearat (GMS) der Firma Emery Oleochemicals.

Komponente G-2: Pentareythrittetrastearat (PETS) der Firma Emery Oleochemicals.

Komponente G-3: Elvaloy 1820 AC; Ethylen-Methylacrylat-copolymer der Firma Dupont.

Die Schlagzähigkeit nach Charpy wurde nach ISO 7391/179eU an einseitig angespritzten Prüfstäben der Dimension 80 x 10 x 4 mm bei Raumtemperatur gemessen.

Die Kerbschlagzähigkeit nach Charpy wurde nach ISO 7391/179A an einseitig angespritzten Prüfstäben der Dimension 80 x 10 x 3 mm bei Raumtemperatur gemessen.

Die Vicat-Erweichungstemperatur VST/B50 als Maß für die Wärmeformbeständigkeit wurde gemäß ISO 306 an Prüfkörpern der Abmessung 80 x 10 x 4 mm mit einer Stempellast von 50 N und einer Aufheizgeschwindigkeit von 50°C/h mit dem Gerät Coesfeld Eco 2920 der Firma Coesfeld Materialtest bestimmt.

Das Brandverhalten wurde nach UL94 V an Stäben der Abmessung 127 x 12,7 x 1,0 mm, 127 x 12,7 x 1,5 mm und 127 x 12,7 x 3 mm gemessen. Zur Bestimmung der Brandklasse wurden jeweils fünf Versuche durchgeführt, und zwar zunächst nach Lagerung über 48h bei 23°C und anschließend bei Lagerung über 7 Tage bei 70°C.

Das Brandverhalten wurde nach UL94-5V an Stäben der Abmessung 127 x 12,7 x 1,5 mm, 127 x 12,7 x 2,0 mm und 127 x 12,7 x 3,0 mm sowie Platten der Abmessung 150 x 105 x 1,5 mm, 150 x 105 x 2,0 mm, 150 x 105 x 3,0 mm gemessen.

Der E-Modul wurde gemäß ISO 527 an einseitig angespritzten Schulterstäben mit einem Kern der Dimension 80 x 10 x 4 mm gemessen.

Die Bestimmung der Schmelzeviskositäten erfolgte nach ISO 11443 (Kegelplatteanordnung).

Die Bestimmung des Schmelze-Volumenfließrate (MVR) erfolgte nach ISO 1133 (bei einer Prüftemperatur von 300 °C, Masse 1,2 kg) mit dem Gerät Zwick 4106 der Firma Zwick Roell.

## 2. Zusammensetzungen

**Tabelle 1a: Erfindungsgemäße Zusammensetzungen, enthaltend Glasfasern, und Vergleichsbeispiele 1V und 4V**

| Beispiel | | 1V | 2 | 3 | 4V | 5 | 6 |
|---|---|---|---|---|---|---|---|
| A-1 | [Gew.-%] | 79,35 | 79,35 | 79,35 | 70 | 70 | 70 |
| A-2<br>A-2 Pulver | [Gew.-%]<br>[Gew.-%] | 3,65<br>6,29 | 3,65<br>6,09 | 3,65<br>5,89 | 3<br>6,29 | 3<br>6,09 | 3<br>5,89 |
| B | [Gew.-%] | 0,2 | 0,2 | 0,2 | 0,2 | 0,2 | 0,2 |
| C-1 | [Gew.-%] | 10 | 10 | 10 | - | - | - |
| C-2 | [Gew.-%] | - | - | - | 20 | 20 | 20 |
| F | [Gew.-%] | 0,01 | 0,01 | 0,01 | 0,01 | 0,01 | 0,01 |
| D | [Gew.-%] | - | 0,2 | 0,4 | - | 0,2 | 0,4 |
| E | [Gew.-%] | 0,5 | 0,5 | 0,5 | 0,5 | 0,5 | 0,5 |
| MVR | [$cm^3$/10 min] | 5,5 | 10,8 | 16,1 | 4,8 | 10,3 | 20,8 |
| VST/B50 | [°C] | 148 | 144,9 | 141,7 | 149,3 | 146,2 | 143,2 |
| Charpy-Schlagzähigkeit bei RT | [$kJ/m^2$] | 193 | 149 | 111 | 48 | 59 | 56 |
| E-Modul | [$N/mm^2$] | 3933 | 4080 | 4147 | 5869 | 6062 | 6194 |
| UL 94 V 1,5 mm Bewertung | | V0 | V0 | V0 | V0 | V0 | V0 |

In Tabelle 1a sind zu erfindungsgemäßen Zusammensetzungen 2, 3, 5 und 6 wichtige Eigenschaften angegeben. Dem sind die Vergleichsbeispiele 1V und 4V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen.

Die erfindungsgemäßen Zusammensetzungen zeigen überraschenderweise neben der erheblichen Verbesserung der Schmelze-Volumenfließrate und der Verbesserung der Schmelzeviskosität eine Erhöhung des E-Moduls (Steifigkeit).

**Tabelle 1b: Erfindungsgemäße Zusammensetzungen, enthaltend Glasfasern, FR-Additiv und Vergleichsbeispiele 7V und 10V**

| Die Werte für die Schmelzeviskositäten in der folgenden Tabelle sind jeweils angegeben zu den Scherraten in [1/sec]. | | | | | | | |
|---|---|---|---|---|---|---|---|
| **Beispiel** | | **7V** | **8** | **9** | **10V** | **11** | **12** |
| A-1 | [Gew.-%] | 70 | 70 | 70 | 70 | 70 | 70 |
| A-4 | [Gew.-%] | 3,00 | 3,00 | 3,00 | 3,00 | 3,00 | 3,00 |
| A-2 | [Gew.-%] | 6,29 | 6,09 | 5,89 | 6,3 | 6,1 | 5,9 |
| C-2 | [Gew.-%] | 20 | 20 | 20 | 20 | 20 | 20 |
| B | [Gew.-%] | 0,2 | 0,2 | 0,2 | 0,2 | 0,2 | 0,2 |
| E | [Gew.-%] | 0,5 | 0,5 | 0,5 | 0,5 | 0,5 | 0,5 |
| D | [Gew.-%] | - | 0,2 | 0,4 | - | 0,2 | 0,4 |
| F | [Gew.-%] | 0,01 | 0,01 | 0,01 | - | - | - |
| **Prüfungen:** | | | | | | | |
| MVR | [ml/10 min] | 4,8 | 11,1 | 17,6 | 4,7 | 10,2 | 19,4 |
| IMVR20’ | [ml/10 min] | 4,8 | 11,9 | 19,7 | 4,9 | 12,1 | 20,8 |
| Schmelzevisk. bei 300°C | | | | | | | |
| eta 50 | [Pas] | 782 | 431 | 294 | 667 | 379 | 286 |
| eta 100 | [Pas] | 672 | 375 | 260 | 627 | 346 | 254 |
| eta 200 | [Pas] | 583 | 326 | 220 | 542 | 303 | 212 |
| eta 500 | [Pas] | 454 | 265 | 175 | 425 | 252 | 168 |
| eta 1000 | [Pas] | 350 | 216 | 147 | 329 | 210 | 143 |
| eta 1500 | [Pas] | 291 | 186 | 129 | 279 | 181 | 128 |
| eta 5000 | [Pas] | 152 | 109 | 79 | 141 | 102 | 77 |
| Schmelzevisk. bei 320°C | | | | | | | |
| eta 50 | [Pas] | 413 | 195 | 141 | 269 | 166 | 124 |
| eta 100 | [Pas] | 375 | 177 | 130 | 244 | 153 | 112 |
| eta 200 | [Pas] | 336 | 157 | 114 | 214 | 135 | 98 |
| eta 500 | [Pas] | 277 | 134 | 92 | 182 | 109 | 80 |

(fortgesetzt)

| | | | | | | | |
|---|---|---|---|---|---|---|---|
| Schmelzevisk. bei 320°C | | | | | | | |
| eta 1000 | [Pas] | 229 | 115 | 79 | 153 | 95 | 67 |
| eta 1500 | [Pas] | 197 | 101 | 73 | 138 | 87 | 62 |
| eta 5000 | [Pas] | 109 | 65 | 52 | 83 | 58 | 44 |
| Schmelzevisk. bei 340°C | | | | | | | |
| eta 50 | [Pas] | 199 | 111 | - | 199 | 95 | - |
| eta 100 | [Pas] | 185 | 104 | 83 | 184 | 90 | - |
| eta 200 | [Pas] | 162 | 92 | 77 | 160 | 86 | 61 |
| eta 500 | [Pas] | 137 | 78 | 65 | 131 | 74 | 54 |
| eta 1000 | [Pas] | 120 | 70 | 54 | 112 | 65 | 48 |
| eta 1500 | [Pas] | 109 | 66 | 49 | 102 | 59 | 44 |
| eta 5000 | [Pas] | 70 | 46 | 36 | 67 | 42 | 32 |
| Vicat VSTB 120 | [°C] | 153,1 | 148,2 | 145,9 | 153,3 | 148,6 | 145,8 |
| Schlagversuch ISO7391/179eU 4mm RT | [kJ/m$^2$] | 59 | 66 | 65 | 61 | 66 | 64 |
| **Zugversuch** | | | | | | | |
| Streckspannung | [N/mm$^2$] | 102 | 106 | 112 | 101 | 108 | - |
| Streckdehnung | [%] | 3,3 | 3,2 | 3,2 | 3,3 | 3,3 | - |
| Reiß festigkeit | [N/mm$^2$] | 101 | 106 | 111 | 100 | 108 | 11 |
| Reiß dehnung | [%] | 3,3 | 3,2 | 3,1 | 3,5 | 3,3 | 3,1 |
| E-Modul | [N/mm$^2$] | 5972 | 6050 | 6295 | 5834 | 6118 | 6246 |
| **UL94V in 1,5 mm** | | | | | | | |
| (48h 23°C) | | V1 | V1 | V1 | V0 | V1 | V1 |
| Einzelbewertung V0/V1/V2/Vn.b. | | 3/2/-/- | 3/2/-/- | -/5/-/- | 5/-/-/- | 3/2/-/- | 3/2/-/- |
| Nachbrennzeit | [s] | 60 | 88 | 80 | 49 | 65 | 77 |
| Nachbrennzeit (1. Brennsatz) | [s] | - | - | - | - | - | - |
| (7d 70°C) | | V1 | V1 | V1 | V1 | V1 | V1 |
| Einzelbewertung V0/V1/V2/Vn.b. | | 4/1/-/- | 3/2/-/- | 3/2/-/- | 1/4/-/- | 4/1/-/- | 3/2/-/- |
| Nachbrennzeit | [s] | 48 | 69 | 72 | 102 | 62 | 79 |
| Nachbrennzeit (1. Brennsatz) | [s] | 75 | - | - | - | - | - |
| Gesamtbewertung | | V1 | V1 | V1 | V1 | V1 | V1 |

In Tabelle 1b sind zu erfindungsgemäßen Zusammensetzungen 8, 9, 11 und 12 wichtige Eigenschaften angegeben. Dem sind die Vergleichsbeispiele 7V und 10V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen. Die Fließkurven der erfindungsgemäßen Zusammensetzungen zeigen bei den verschiedenen Messtemperaturen über den gesamten Scherbereich jeweils deutlich reduzierte Schmelzeviskositäten, was eine verbesserte Fließfähigkeit bedeutet.

Die erfindungsgemäßen Zusammensetzungen zeigen überraschenderweise neben der erheblichen Verbesserung der rheologischen Eigenschaften eine Erhöhung des E-Moduls (Steifigkeit) unter Beibehaltung der guten Brandeigenschaften.

**Tabelle 1c: Erfindungsgemäße Zusammensetzungen, enthaltend Glasfasern und FR-Additiv, und Vergleichsbeispiele 13V und 16V**

| Die Werte für die Schmelzeviskositäten in der folgenden Tabelle sind jeweils angegeben zu den Scherraten in [1/sec]. | | | | | | | |
|---|---|---|---|---|---|---|---|
| **Beispiele** | | **13V** | **14** | **15** | **16V** | **17** | **18** |
| A-7 | [Gew.-%] | 30,00 | 30,00 | 30,00 | 30,00 | 30,00 | 30,00 |
| A-2 | [Gew.-%] | 50,42 | 50,42 | 50,42 | 50,42 | 50,42 | 50,42 |
| A-6 | [Gew.-%] | 5,55 | 5,35 | 5,15 | 5,54 | 5,34 | 5,14 |
| C-1 | [Gew.-%] | 14,00 | 14,00 | 14,00 | 14,00 | 14,00 | 14,00 |
| D | [Gew.-%] | - | 0,20 | 0,40 | - | 0,20 | 0,40 |
| B | [Gew.-%] | 0,03 | 0,03 | 0,03 | 0,03 | 0,03 | 0,03 |
| F | [Gew.-%] | - | - | - | 0,01 | 0,01 | 0,01 |
| **Prüfungen:** | | | | | | | |
| MVR | [ml/10 min] | 7,2 | 13,4 | 16,5 | 7,4 | 13,5 | 22,6 |
| IMVR20' | [ml/10 min] | 7,2 | 13,6 | 16,8 | 7,6 | 14,2 | 24,2 |
| Schmelzevisk. bei 300°C | | | | | | | |
| eta 50 | [Pas] | 623 | 492 | 371 | 666 | 493 | 370 |
| eta 100 | [Pas] | 577 | 438 | 313 | 568 | 416 | 302 |
| eta 200 | [Pas] | 502 | 378 | 268 | 504 | 354 | 247 |
| eta 500 | [Pas] | 400 | 313 | 231 | 408 | 299 | 207 |
| eta 1000 | [Pas] | 316 | 258 | 197 | 328 | 247 | 176 |
| eta 1500 | [Pas] | 268 | 222 | 173 | 274 | 213 | 157 |
| eta 5000 | [Pas] | 139 | 119 | 102 | 142 | 119 | 94 |
| Schmelzevisk. bei 320°C | | | | | | | |
| eta 50 | [Pas] | 349 | 286 | 270 | 391 | 355 | 243 |
| eta 100 | [Pas] | 337 | 248 | 222 | 327 | 286 | 197 |
| eta 200 | [Pas] | 297 | 235 | 183 | 293 | 233 | 165 |
| eta 500 | [Pas] | 252 | 198 | 149 | 250 | 194 | 133 |
| eta 1000 | [Pas] | 214 | 165 | 130 | 211 | 166 | 116 |
| eta 1500 | [Pas] | 186 | 146 | 119 | 185 | 148 | 105 |
| eta 5000 | [Pas] | 108 | 88 | 78 | 103 | 95 | 72 |
| Schmelzevisk. bei 340°C | | | | | | | |
| eta 50 | [Pas] | 169 | 232 | 164 | 278 | 255 | 115 |
| eta 100 | [Pas] | 168 | 186 | 137 | 204 | 207 | 109 |
| eta 200 | [Pas] | 167 | 148 | 114 | 192 | 171 | 99 |
| eta 500 | [Pas] | 147 | 127 | 99 | 162 | 142 | 83 |
| eta 1000 | [Pas] | 125 | 110 | 86 | 140 | 124 | 73 |
| eta 1500 | [Pas] | 112 | 101 | 79 | 127 | 113 | 69 |
| eta 5000 | [Pas] | 78 | 70 | 54 | 83 | 71 | 52 |

(fortgesetzt)

| Die Werte für die Schmelzeviskositäten in der folgenden Tabelle sind jeweils angegeben zu den Scherraten in [1/sec]. | | | | | | | |
|---|---|---|---|---|---|---|---|
| **Beispiele** | | **13V** | **14** | **15** | **16V** | **17** | **18** |
| Vicat VSTB 50 | [°C] | 150,2 | 146,9 | 145,0 | 150,5 | 146,3 | 143,8 |
| **UL94V in 3.0mm** | | | | | | | |
| (48h 23°C) | | V0 | V0 | V0 | V0 | V0 | V0 |
| Einzelbewertung V0/V1/V2/Vn.b. | | 5/-/- /- | 5/-/- /- | 5/-/- /- | 5/-/- /- | 5/-/- /- | 5/-/- /- |
| Nachbrennzeit | [s] | 24 | 28 | 29 | 32 | 21 | 41 |
| Nachbrennzeit (1. Brennsatz ) | [s] | - | - | - | - | - | - |
| (7d 70°C) | | V0 | V0 | V0 | V0 | V0 | V0 |
| Einzelbewertung V0/V1/V2/Vn.b. | | 5/-/- /- | 5/-/- /- | 5/-/- /- | 5/-/- /- | 5/-/- /- | 5/-/- /- |
| Nachbrennzeit | [s] | 23 | 22 | 33 | 26 | 24 | 22 |
| Nachbrennzeit (1. Brennsatz ) | [s] | - | - | - | - | - | - |
| Gesamtbeurteilung | [s] | V0 | V0 | V0 | V0 | V0 | V0 |

In Tabelle 1c sind zu erfindungsgemäßen Zusammensetzungen 14, 15, 17 und 18 wichtige Eigenschaften angegeben. Dem sind die Vergleichsbeispiele 13V und 16V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen. Die Fließkurven der erfindungsgemäßen Zusammensetzungen zeigen bei den verschiedenen Messtemperaturen über den gesamten Scherbereich jeweils deutlich reduzierte Schmelzeviskositäten, was eine verbesserte Fließfähigkeit bedeutet.

Die erfindungsgemäßen Zusammensetzungen zeigen überraschenderweise neben der erheblichen Verbesserung der rheologischen Eigenschaften auch gute Brandeigenschaften.

**Tabelle 1d: Erfindungsgemäße Zusammensetzungen, enthaltend Glasfasern und FR-Additiv, und Vergleichsbeispiele 19V und 22V**

| Die Werte für die Schmelzeviskositäten in der folgenden Tabelle sind jeweils angegeben zu den Scherraten in [1/sec]. | | | | | | | |
|---|---|---|---|---|---|---|---|
| **Beispiel** | | **19V** | **20** | **21** | **22V** | **23** | **24** |
| A-7 | [Gew.-%] | 73,00 | 73,00 | 73,00 | 73,00 | 73,00 | 73,00 |
| A-6 | [Gew.-%] | 4,94 | 4,74 | 4,54 | 4,93 | 4,73 | 4,53 |
| C-7 | [Gew.-%] | 20,00 | 20,00 | 20,00 | 20,00 | 20,00 | 20,00 |
| B | [Gew.-%] | 0,06 | 0,06 | 0,06 | 0,06 | 0,06 | 0,06 |
| G-3 | [Gew.-%] | 2,00 | 2,00 | 2,00 | 2,00 | 2,00 | 2,00 |
| D | [Gew.-%] | - | 0,20 | 0,40 | - | 0,20 | 0,40 |
| F | [Gew.-%] | - | - | - | 0,01 | 0,01 | 0,01 |
| **Prüfungen:** | | | | | | | |
| MVR | [ml/10 min] | 8,5 | 15,7 | 33,4 | 8,2 | 18,2 | 28,9 |
| IMVR20’ | [ml/10 min] | 8,7 | 16,1 | 32,3 | 8,7 | 18,9 | 28,3 |
| Vicat VSTB50 | [°C] | 151,8 | 147,6 | 143,7 | 151,4 | 147,9 | 144 |
| Schmelzevisk. bei 300°C | | | | | | | |

(fortgesetzt)

| Die Werte für die Schmelzeviskositäten in der folgenden Tabelle sind jeweils angegeben zu den Scherraten in [1/sec]. | | | | | | | |
|---|---|---|---|---|---|---|---|
| **Beispiel** | | **19V** | **20** | **21** | **22V** | **23** | **24** |
| eta 50 | [Pas] | 462 | 308 | 148 | 508 | 291 | 193 |
| eta 100 | [Pas] | 415 | 255 | 135 | 449 | 260 | 176 |
| eta 200 | [Pas] | 369 | 242 | 124 | 399 | 235 | 157 |
| eta 500 | [Pas] | 302 | 203 | 107 | 320 | 200 | 133 |
| eta 1000 | [Pas] | 236 | 167 | 94 | 250 | 167 | 117 |
| eta 1500 | [Pas] | 201 | 143 | 87 | 213 | 144 | 104 |
| eta 5000 | [Pas] | 108 | 83 | 57 | 117 | 86 | 65 |
| Schmelzevisk. bei 320°C | | | | | | | |
| eta 50 | [Pas] | 261 | 182 | 97 | 287 | 183 | 130 |
| eta 100 | [Pas] | 247 | 164 | 85 | 266 | 159 | 111 |
| eta 200 | [Pas] | 238 | 149 | 77 | 239 | 139 | 101 |
| eta 500 | [Pas] | 203 | 128 | 67 | 204 | 124 | 88 |
| eta 1000 | [Pas] | 169 | 111 | 60 | 169 | 108 | 77 |
| eta 1500 | [Pas] | 145 | 99 | 56 | 144 | 97 | 71 |
| eta 5000 | [Pas] | 89 | 61 | 40 | 85 | 61 | 47 |
| Schmelzevisk. bei 340°C | | | | | | | |
| eta 50 | [Pas] | 159 | 99 | 60 | 183 | 120 | 76 |
| eta 100 | [Pas] | 151 | 97 | 56 | 168 | 105 | 71 |
| eta 200 | [Pas] | 138 | 88 | 49 | 156 | 94 | 63 |
| eta 500 | [Pas] | 122 | 80 | 42 | 137 | 83 | 58 |
| eta 1000 | [Pas] | 108 | 72 | 39 | 119 | 74 | 51 |
| eta 1500 | [Pas] | 98 | 66 | 35 | 105 | 68 | 47 |
| eta 5000 | [Pas] | 65 | 45 | 28 | 68 | 46 | 35 |
| **UL94V in 1,0 mm** | | | | | | | |
| (48h 23°C) | | V1 | V2 | V2 | V2 | V1 | V2 |
| Einzelbew. V0/V1/V2/Vn.b. | | 4/1/- /- | 3/-/2/- | 2/1/2/- | 3/1/1/- | 3/2/- /- | -/- /5/- |
| Nachbrennzeit | [s] | 73 | 61 | 55 | 81 | 97 | 72 |
| Nachbrennzeit (1. Brennsatz ) | [s] | 118 | - | - | >115 | - | - |
| (7d 70°C) | | V2 | V2 | V2 | V2 | V2 | V2 |
| Einzelbew. V0/V1/V2/Vn.b. | | 3/- /2/- | 1/2/2/- | 1/-/4/- | - /3/2/- | 1/- /4/- | -/- /5/- |
| Nachbrennzeit | [s] | 67 | 92 | 63 | 118 | 54 | 75 |
| Nachbrennzeit (1. Brennsatz) | [s] | - | - | - | - | - | - |

(fortgesetzt)

| Die Werte für die Schmelzeviskositäten in der folgenden Tabelle sind jeweils angegeben zu den Scherraten in [1/sec]. | | | | | | | |
|---|---|---|---|---|---|---|---|
| **Beispiel** | | **19V** | **20** | **21** | **22V** | **23** | **24** |
| Gesamtbewertung | | V2 | V2 | V2 | V2 | V2 | V2 |

In Tabelle 1d sind zu erfindungsgemäßen Zusammensetzungen 20, 21, 23 und 24 wichtige Eigenschaften angegeben. Dem sind die Vergleichsbeispiele 19V und 22V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen. Die Fließkurven der erfindungsgemäßen Zusammensetzungen zeigen bei den verschiedenen Messtemperaturen über den gesamten Scherbereich jeweils deutlich reduzierte Schmelzeviskositäten, was eine verbesserte Fließfähigkeit bedeutet.

**Tabelle 1e: Erfindungsgemäße Zusammensetzungen, enthaltend Glasfasern, und Vergleichsbeispiele 25V und 28V**

| Die Werte für die Schmelzeviskositäten in der folgenden Tabelle sind jeweils angegeben zu Scherraten in [1/sec]. den | | | | | | | |
|---|---|---|---|---|---|---|---|
| **Beispiel** | | **25V** | **26** | **27** | **28V** | **29** | **30** |
| A-3 | [Gew.-%] | 63,00 | 63,00 | 63,00 | 63,00 | 63,00 | 63,00 |
| A-2 | [Gew.-%] | 7,00 | 6,80 | 6,60 | 6,99 | 6,79 | 6,59 |
| C-8 | [Gew.-%] | 30,00 | 30,00 | 30,00 | 30,00 | 30,00 | 30,00 |
| D | [Gew.-%] | - | 0,20 | 0,40 | - | 0,20 | 0,40 |
| F | [Gew.-%] | - | - | - | 0,01 | 0,01 | 0,01 |
| **Prüfungen** | | | | | | | |
| MVR 300°C/1,2 kg | [$cm^3$/10 min] | 4,5 | 9,1 | 15,3 | 4,5 | 8,8 | 15,3 |
| IMVR20' 300°C/1,2 kg | [$cm^3$/10 min] | 5,1 | 10,4 | 19,9 | 5,6 | 10,9 | 19,0 |
| Schmelzevisk. bei 300°C | | | | | | | |
| eta 50 | [Pas] | 763 | 532 | 376 | 721 | 540 | 420 |
| eta 100 | [Pas] | 669 | 483 | 340 | 677 | 455 | 367 |
| eta 200 | [Pas] | 581 | 430 | 301 | 591 | 377 | 324 |
| eta 500 | [Pas] | 452 | 346 | 249 | 460 | 302 | 266 |
| eta 1000 | [Pas] | 346 | 274 | 205 | 348 | 258 | 218 |
| eta 1500 | [Pas] | 294 | 235 | 174 | 303 | 222 | 189 |
| eta 5000 | [Pas] | 154 | 129 | 104 | 158 | 132 | 113 |
| Schmelzevisk. bei 320°C | | | | | | | |
| eta 50 | [Pas] | 397 | 278 | 133 | 372 | 299 | 220 |
| eta 100 | [Pas] | 60 | 237 | 128 | 365 | 255 | 180 |
| eta 200 | [Pas] | 321 | 209 | 114 | 325 | 228 | 165 |
| eta 500 | [Pas] | 265 | 176 | 95 | 250 | 199 | 132 |
| eta 1000 | [Pas] | 221 | 154 | 83 | 206 | 167 | 110 |
| eta 1500 | [Pas] | 190 | 139 | 75 | 170 | 149 | 95 |
| eta 5000 | [Pas] | 110 | 88 | 55 | 100 | 93 | 68 |

(fortgesetzt)

| | | | | | | | |
|---|---|---|---|---|---|---|---|
| Schmelzevisk. bei 340°C | | | | | | | |
| eta 50 | [Pas] | 178 | 114 | 84 | 215 | 120 | 104 |
| eta 100 | [Pas] | 168 | 106 | 72 | 187 | 115 | 92 |
| eta 200 | [Pas] | 153 | 95 | 65 | 159 | 105 | 82 |
| eta 500 | [Pas] | 131 | 84 | 57 | 141 | 92 | 66 |
| eta 1000 | [Pas] | 118 | 76 | 51 | 117 | 89 | 57 |
| eta 1500 | [Pas] | 112 | 71 | 48 | 113 | 83 | 52 |
| eta 5000 | [Pas] | 75 | 55 | 35 | 73 | 65 | 42 |

In Tabelle le sind zu erfindungsgemäßen Zusammensetzungen 26, 27, 29 und 30 wichtige Eigenschaften angegeben. Dem sind die Vergleichsbeispiele 25V und 28V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen. Die Fließkurven der erfindungsgemäßen Zusammensetzungen zeigen bei den verschiedenen Messtemperaturen über den gesamten Scherbereich jeweils deutlich reduzierte Schmelzeviskositäten, was eine verbesserte Fließfähigkeit bedeutet.

**Tabelle 1f: Erfindungsgemäße Zusammensetzungen, enthaltend Glasfasern, und Vergleichsbeispiele 31V und 34V**

| Die Werte für die Schmelzeviskositäten in der folgenden Tabelle sind jeweils angegeben zu den Scherraten in [1/sec]. | | | | | | | |
|---|---|---|---|---|---|---|---|
| **Beispiele** | | **31V** | **32** | **33** | **34V** | **35** | **36** |
| A-3 | [Gew.-%] | 63,00 | 63,00 | 63,00 | 63,00 | 63,00 | 63,00 |
| A-2 | [Gew.-%] | 7,00 | 6,80 | 6,60 | 6,99 | 6,79 | 6,59 |
| C-9 | [Gew.-%] | 30,00 | 30,00 | 30,00 | 30,00 | 30,00 | 30,00 |
| D | [Gew.-%] | - | 0,20 | 0,40 | - | 0,20 | 0,40 |
| F | [Gew.-%] | - | - | - | 0,01 | 0,01 | 0,01 |
| **Prüfungen** | | | | | | | |
| MVR 300°C/1,2 kg | [$cm^3$/10 min] | 5,3 | 10,1 | 19,4 | 5,5 | 9,9 | 19,8 |
| IMVR20' 300°C/1,2 kg | [$cm^3$/10 min] | 5,9 | 13,4 | 24,3 | 5,8 | 12,6 | 24,8 |
| Schmelzevisk. bei 300°C | | | | | | | |
| eta 50 | [Pas] | 699 | 586 | 436 | 630 | 534 | 397 |
| eta 100 | [Pas] | 633 | 531 | 390 | 628 | 523 | 390 |
| eta 200 | [Pas] | 580 | 483 | 361 | 579 | 486 | 369 |
| eta 500 | [Pas] | 480 | 408 | 313 | 479 | 411 | 302 |
| eta 1000 | [Pas] | 384 | 334 | 263 | 381 | 336 | 264 |
| eta 1500 | [Pas] | 317 | 282 | 230 | 318 | 284 | 227 |
| eta 5000 | [Pas] | 157 | 145 | 125 | 158 | 147 | 122 |
| Schmelzevisk. bei 320°C | | | | | | | |
| eta 50 | [Pas] | 328 | 250 | 175 | 260 | 281 | 200 |

(fortgesetzt)

| | | | | | | | |
|---|---|---|---|---|---|---|---|
| Schmelzevisk. bei 320°C | | | | | | | |
| eta 100 | [Pas] | 305 | 237 | 172 | 255 | 267 | 191 |
| eta 200 | [Pas] | 282 | 233 | 161 | 250 | 254 | 182 |
| eta 500 | [Pas] | 250 | 212 | 152 | 237 | 230 | 169 |
| eta 1000 | [Pas] | 217 | 186 | 138 | 211 | 201 | 153 |
| eta 1500 | [Pas] | 193 | 167 | 124 | 192 | 180 | 142 |
| eta 5000 | [Pas] | 111 | 104 | 81 | 116 | 116 | 91 |
| Schmelzevisk. bei 340°C | | | | | | | |
| eta 50 | [Pas] | 142 | 105 | 69 | 174 | 147 | 90 |
| eta 100 | [Pas] | 137 | 102 | 66 | 173 | 140 | 87 |
| eta 200 | [Pas] | 133 | 99 | 62 | 166 | 137 | 84 |
| eta 500 | [Pas] | 128 | 96 | 60 | 156 | 120 | 82 |
| eta 1000 | [Pas] | 119 | 93 | 56 | 142 | 105 | 79 |
| eta 1500 | [Pas] | 112 | 88 | 56 | 132 | 95 | 77 |
| eta 5000 | [Pas] | 77 | 65 | 46 | 85 | 69 | 58 |

In Tabelle 1f sind zu erfindungsgemäßen Zusammensetzungen 32, 33, 35 und 36 wichtige Eigenschaften angegeben. Dem sind die Vergleichsbeispiele 31V und 34V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen. Die Fließkurven der erfindungsgemäßen Zusammensetzungen zeigen bei den verschiedenen Messtemperaturen über den gesamten Scherbereich jeweils deutlich reduzierte Schmelzeviskositäten, was eine verbesserte Fließfähigkeit bedeutet.

**Tabelle 1g: Erfindungsgemäße Zusammensetzungen, enthaltend Glasfasern, und Vergleichsbeispiel 37V**

| **Rezeptur** | | **37V** | **38** | **39** | **40** | **41** | **42** | **43** |
|---|---|---|---|---|---|---|---|---|
| A-1 | [Gew.-%] | 79,35 | 79,35 | 79,35 | 74,35 | 74,35 | 69,35 | 69,35 |
| A-4 | [Gew.-%] | 3,65 | 3,65 | 3,65 | 3,65 | 3,65 | 3,65 | 3,65 |
| A-2 | [Gew.-%] | 5,85 | 6,1 | 5,9 | 6,1 | 5,9 | 6,1 | 5,9 |
| G-2 | [Gew.-%] | 0,45 | - | - | - | - | - | - |
| D | [Gew.-%] | - | 0,2 | 0,4 | 0,2 | 0,4 | 0,2 | 0,4 |
| Blendex 449 | [Gew.-%] | 0,2 | 0,2 | 0,2 | 0,2 | 0,2 | 0,2 | 0,2 |
| E | [Gew.-%] | 0,5 | 0,5 | 0,5 | 0,5 | 0,5 | 0,5 | 0,5 |
| C-1 | [Gew.-%] | 10 | 10 | 10 | 15 | 15 | 20 | 20 |
| **Prüfungen:** | | | | | | | | |
| MVR | [$cm^3$/10 min] | 5,7 | 10,4 | 16,6 | 8,1 | 11,9 | 6,6 | 11,9 |
| IMVR20' | [$cm^3$/10 min] | 5,8 | 11,1 | 17,3 | 8,4 | 12,3 | 7,2 | 11,0 |
| Delta MVR/IMVR20' | | **0,1** | **0,7** | **0,7** | **0,3** | **0,4** | **0,6** | **-0,9** |
| KET | [°C] | 137 | 137 | 133 | 137 | 132 | 136 | 133 |
| UL94-5V in 3,0mm | | | | | | | | |
| Stabprüfung | | ja | ja | ja | ja | ja | ja | ja |
| Plattenprüfung | | bestanden | bestanden | bestanden | bestanden | bestanden | bestanden | bestanden |
| Klassifizierung | | 94-5VA | 94-5VA | 94-5VA | 94-5VA | 94-5VA | 94-5VA | 94-5VA |
| UL94-5V in 2,0mm | | | | | | | | |
| Stabprüfung | | ja | ja | ja | ja | ja | ja | ja |
| Plattenprüfung | | nein | nein | nein | bestanden | bestanden | bestanden | bestanden |
| Klassifizierung | | 94-5VB | 94-5VB | 94-5VB | 94-5VA | 94-5VA | 94-5VA | 94-5VA |
| UL94-5V in 1,5mm | | | | | | | | |
| Stabprüfung | | ja | nein | nein | nein | ja | ja | nein |
| Plattenprüfung | | nein | - | - | - | nein | bestanden | - |
| Klassifizierung | | 94-5VB | - | - | - | 94-5VB | 94-5VA | - |

In Tabelle 1g sind zu erfindungsgemäßen Zusammensetzungen 38 bis 43 wichtige Eigenschaften angegeben. Dem ist das Vergleichsbeispiel 37V gegenübergestellt. Aus der Tabelle ist zu erkennen, dass die Zusammensetzung gemäß dem Vergleichsbeispiel, welches keinen Diglycerolester enthält, eine deutlich schlechtere Schmelze-Volumenfließrate MVR aufweist.

Beispiel 41 zeigt, dass trotz Verbesserung der Fließrate die UL 94-5V Klassifizierung im Brandtest erhalten bleibt. Beispiel 42 zeigt, dass bei annähernd gleichbleibendem MVR sogar eine höhere Wertung des 94-5V Tests zu erreichen ist (von 5VB auf 5VA bei 1,5 mm)

**Tabelle 2a: Erfindungsgemäße Zusammensetzungen, enthaltend Carbonfasern, und Vergleichsbeispiel 44V**

| Die Werte für die Schmelzeviskositäten in der folgenden Tabelle sind jeweils angegeben zu den Scherraten in [1/sec]. | | | | | |
|---|---|---|---|---|---|
| **Beispiel** | | **44V** | **45** | **46** | **47** |
| A-3 | [Gew.-%] | 81,00 | 81,00 | 81,00 | 81,00 |
| A-2 | [Gew.-%] | 7,00 | 6,79 | 6,69 | 6,59 |
| C-3 | [Gew.-%] | 12,00 | 12,00 | 12,00 | 12,00 |
| D | [Gew.-%] | - | 0,20 | 0,30 | 0,40 |
| F | [Gew.-%] | - | 0,01 | 0,01 | 0,01 |
| **Ergebnisse** | | | | | |
| MVR | [$cm^3$/10 min] | 7,0 | 8,6 | 11,7 | 20,5 |
| IMVR20' | [$cm^3$/10 min] | 7,6 | 9,9 | 16,9 | 24,1 |
| Schmelzevisk. bei 300°C | | | | | |
| eta 50 | [Pas] | 535 | 492 | 468 | 401 |
| eta 100 | [Pas] | 497 | 466 | 441 | 379 |
| eta 200 | [Pas] | 452 | 423 | 401 | 343 |
| eta 500 | [Pas] | 365 | 346 | 327 | 287 |
| eta 1000 | [Pas] | 292 | 278 | 264 | 233 |
| eta 1500 | [Pas] | 253 | 241 | 226 | 203 |
| eta 5000 | [Pas] | 138 | 130 | 124 | 116 |
| Schmelzevisk. bei 320°C | | | | | |
| eta 50 | [Pas] | 254 | 236 | 240 | 216 |
| eta 100 | [Pas] | 250 | 227 | 235 | 200 |
| eta 200 | [Pas] | 249 | 225 | 221 | 199 |
| eta 500 | [Pas] | 217 | 198 | 192 | 176 |
| eta 1000 | [Pas] | 184 | 167 | 163 | 154 |
| eta 1500 | [Pas] | 162 | 147 | 143 | 134 |
| eta 5000 | [Pas] | 100 | 93 | 91 | 87 |
| Schmelzevisk. bei 340°C | | | | | |
| eta 50 | [Pas] | 149 | 118 | 109 | 101 |
| eta 100 | [Pas] | 146 | 115 | 107 | 99 |
| eta 200 | [Pas] | 139 | 114 | 105 | 96 |
| eta 500 | [Pas] | 126 | 113 | 103 | 88 |
| eta 1000 | [Pas] | 107 | 102 | 99 | 77 |
| eta 1500 | [Pas] | 102 | 93 | 90 | 72 |

(fortgesetzt)

| Die Werte für die Schmelzeviskositäten in der folgenden Tabelle sind jeweils angegeben zu den Scherraten in [1/sec]. | | | | | |
|---|---|---|---|---|---|
| **Beispiel** | | **44V** | **45** | **46** | **47** |
| eta 5000 | [Pas] | 70 | 64 | 64 | 50 |

In Tabelle 2a sind zu erfindungsgemäßen Zusammensetzungen 45 bis 47 wichtige Eigenschaften angegeben. Dem ist das Vergleichsbeispiel 44V gegenübergestellt. Aus der Tabelle ist zu erkennen, dass die Zusammensetzungen gemäß dem Vergleichsbeispiel, welches keinen Diglycerolester enthält, deutlich schlechtere Schmelze-Volumenfließraten MVR aufweist. Die Fließkurven der erfindungsgemäßen Zusammensetzungen zeigen bei den verschiedenen Messtemperaturen über den gesamten Scherbereich jeweils deutlich reduzierte Schmelzeviskositäten, was eine verbesserte Fließfähigkeit bedeutet.

**Tabelle 2b: Erfindungsgemäße Zusammensetzungen, enthaltend Carbonfasern, und Vergleichsbeispiele 48V und 52V**

| Die Werte für die Schmelzeviskositäten in der folgenden Tabelle sind jeweils angegeben zu den Scherraten in [1/sec]. | | | | | | | | | |
|---|---|---|---|---|---|---|---|---|---|
| **Rezeptur** | | **48V** | **49** | **50 51** | | **52V** | **53** | **54** | **55** |
| A-3 | [Gew.-%] | 81,00 | 81,00 | 81,00 | 81,00 | 81,00 | 81,00 | 81,00 | 81,00 |
| A-2 | [Gew.-%] | 7,00 | 6,79 | 6,69 | 6,59 | 7,00 | 6,79 | 6,69 | 6,59 |
| C-5 | [Gew.-%] | 12,00 | 12,00 | 12,00 | 12,00 | - | - | - | - |
| C-6 | [Gew.-%] | - | - | - | - | 12,00 | 12,00 | 12,00 | 12,00 |
| D | [Gew.-%] | - | 0,20 | 0,30 | 0,40 | - | 0,20 | 0,30 | 0,40 |
| F | [Gew.-%] | - | 0,01 | 0,01 | 0,01 | - | 0,01 | 0,01 | 0,01 |
| **Prüfungen:** | | | | | | | | | |
| MVR | [$cm^3$/10 min] | 6,8 | 10,6 | 12,6 | 18,3 | 6,3 | 7,9 | 9,1 | 10,4 |
| IMVR20’ | [$cm^3$/10 min] | 7,5 | 13,2 | 17,4 | 25,8 | 7,0 | 10,4 | 11,1 | 13,6 |
| Schmelzevisk. bei 300°C | | | | | | | | | |
| eta 50 | [Pas] | 456 | 366 | 349 | 302 | 513 | 456 | 453 | 452 |
| eta 100 | [Pas] | 424 | 350 | 329 | 284 | 512 | 446 | 427 | 423 |
| eta 200 | [Pas] | 388 | 322 | 303 | 270 | 458 | 411 | 391 | 386 |
| eta 500 | [Pas] | 330 | 275 | 263 | 236 | 376 | 339 | 324 | 320 |
| eta 1000 | [Pas] | 269 | 226 | 222 | 197 | 299 | 275 | 263 | 257 |
| eta 1500 | [Pas] | 233 | 197 | 196 | 173 | 257 | 239 | 228 | 223 |
| eta 5000 | [Pas] | 126 | 111 | 111 | 103 | 135 | 126 | 123 | 121 |
| Schmelzevisk. bei 320°C | | | | | | | | | |
| eta 50 | [Pas] | 236 | 164 | 146 | 90 | 350 | 252 | 243 | 225 |
| eta 100 | [Pas] | 217 | 158 | 150 | 88 | 326 | 240 | 229 | 218 |
| eta 200 | [Pas] | 193 | 151 | 141 | 86 | 322 | 241 | 225 | 198 |
| eta 500 | [Pas] | 165 | 135 | 134 | 85 | 270 | 211 | 198 | 175 |
| eta 1000 | [Pas] | 145 | 122 | 121 | 78 | 224 | 180 | 171 | 157 |
| eta 1500 | [Pas] | 126 | 110 | 109 | 76 | 192 | 161 | 154 | 135 |

(fortgesetzt)

| | | | | | | | | | |
|---|---|---|---|---|---|---|---|---|---|
| Schmelzevisk. bei 320°C | | | | | | | | | |
| eta 5000 | [Pas] | 85 | 74 | 74 | 54 | 110 | 97 | 93 | 85 |
| Schmelzevisk. bei 340°C | | | | | | | | | |
| eta 50 | [Pas] | 102 | 56 | 67 | 38 | 163 | 145 | 122 | 134 |
| eta 100 | [Pas] | 101 | 55 | 66 | 37 | 162 | 143 | 117 | 126 |
| eta 200 | [Pas] | 99 | 53 | 61 | 35 | 161 | 138 | 113 | 121 |
| eta 500 | [Pas] | 92 | 52 | 55 | 34 | 136 | 127 | 112 | 110 |
| eta 1000 | [Pas] | 85 | 49 | 50 | 33 | 124 | 115 | 104 | 97 |
| eta 1500 | [Pas] | 81 | 48 | 48 | 32 | 111 | 106 | 95 | 85 |
| eta 5000 | [Pas] | 58 | 38 | 37 | 25 | 75 | 70 | 63 | 62 |

In Tabelle 2b sind zu erfindungsgemäßen Zusammensetzungen 49 bis 51 und 53 bis 55 wichtige Eigenschaften angegeben. Dem sind die Vergleichsbeispiels 48V und 52V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen. Die Fließkurven der erfindungsgemäßen Zusammensetzungen zeigen bei den verschiedenen Messtemperaturen über den gesamten Scherbereich jeweils deutlich reduzierte Schmelzeviskositäten, was eine verbesserte Fließfähigkeit bedeutet.

**Tabelle 3a: Erfindungsgemäße Zusammensetzungen, enthaltend Carbon-Nanotubes, und Vergleichsbeispiele 56V bis 63V**

| **Beispiel** | | **56V** | **57V** | **58V** | **59V** | **60V** | **61V** | **62V** | **63V** | **64** | **65** | **66** |
|---|---|---|---|---|---|---|---|---|---|---|---|---|
| A-3 | [Gew.-%] | 90,00 | 90,00 | 90,00 | 90,00 | 90,00 | 90,00 | 90,00 | 90,00 | 90,00 | 90,00 | 90,00 |
| A-2 | [Gew.-%] | 10,00 | 8,00 | 7,80 | 7,60 | 7,40 | 7,80 | 7,60 | 7,40 | 7,80 | 7,60 | 7,40 |
| G-1 | [Gew.-%] | - | - | 0,20 | 0,40 | 0,60 | - | - | - | - | - | - |
| G-2 | [Gew.-%] | - | - | - | - | - | 0,20 | 0,40 | 0,60 | - | - | - |
| D | [Gew.-%] | - | - | - | - | - | - | - | - | 0,20 | 0,40 | 0,60 |
| C-4 | [Gew.-%] | - | 2,00 | 2,00 | 2,00 | 2,00 | 2,00 | 2,00 | 2,00 | 2,00 | 2,00 | 2,00 |
| **Prüfungen:** | | | | | | | | | | | | |
| MVR | [$cm^3$/10 min] | 10,6 | 4,2 | 6,1 | 8,6 | 11,6 | 4,3 | 4,7 | 5,3 | 9,6 | 11,8 | 26,1 |
| IMVR20' | [$cm^3$/10 min] | 10 | 4,1 | 6,4 | 10,1 | 14,3 | 4,3 | 5 | 5,4 | 10,2 | 13,5 | 27,2 |
| Vicat VSTB50 | [°C] | 147,2 | 148,2 | 145 | 142,9 | 140,6 | 146,5 | 145,2 | 143,6 | 145,2 | 142,9 | 139,4 |

In Tabelle 3a sind zu erfindungsgemäßen Zusammensetzungen 64 bis 66 wichtige Eigenschaften angegeben. Dem sind die Vergleichsbeispiele 56V bis 63V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen.

**Tabelle 3b: Erfindungsgemäße Zusammensetzungen, enthaltend Carbon-Nanotubes, und Vergleichsbeispiele 67V bis 74V**

| **Beispiel** | | **67V** | **68V** | **69V** | **70V** | **71V** | **72V** | **73V** | **74V** | **75** | **76** | **77** |
|---|---|---|---|---|---|---|---|---|---|---|---|---|
| A-3 | [Gew.-%] | 90,00 | 90,00 | 90,00 | 90,00 | 90,00 | 90,00 | 90,00 | 90,00 | 90,00 | 90,00 | 90,00 |
| A-2 | [Gew.-%] | 10,00 | 7,00 | 6,80 | 6,60 | 6,40 | 6,80 | 6,60 | 6,40 | 6,80 | 6,60 | 6,40 |
| G-1 | [Gew.-%] | - | - | 0,20 | 0,40 | 0,60 | - | - | - | - | - | - |
| G-2 | [Gew.-%] | - | - | - | - | - | 0,20 | 0,40 | 0,60 | - | - | - |
| D | [Gew.-%] | - | - | - | - | - | - | - | - | 0,20 | 0,40 | 0,60 |
| C-4 | [Gew.-%] | - | 3,00 | 3,00 | 3,00 | 3,00 | 3,00 | 3,00 | 3,00 | 3,00 | 3,00 | 3,00 |
| **Prüfungen:** | | | | | | | | | | | | |
| MVR | [$cm^3$/10 min] | 10,2 | 2,2 | 3,7 | 5,7 | 8,2 | 2,5 | 2,8 | 3,2 | 4,9 | 15,7 | 17,7 |
| IMVR20' | [$cm^3$/10 min] | 10,2 | 2,3 | 4,0 | 6,9 | 10,1 | 2,7 | 2,9 | 3,1 | 5,4 | 14,2 | 19,3 |
| **Delta MVR/IMVR20'** | | **0,0** | **0,1** | **0,3** | **1,2** | **1,9** | **0,2** | **0,1** | **-0,1** | **0,5** | **-1,5** | **1,6** |
| Vicat VSTB50 | [°C] | 147,5 | 148,8 | 145,9 | 143,3 | 140,5 | 146,9 | 145,6 | 143,5 | 145,2 | 142,7 | 139,6 |

In Tabelle 3b sind zu erfindungsgemäßen Zusammensetzungen 75 bis 77 wichtige Eigenschaften angegeben. Dem sind die Vergleichsbeispiele 67V bis 74V gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen.

**Tabelle 3c: Erfindungsgemäße Zusammensetzungen, enthaltend Carbon-Nanotubes und Vergleichsbeispiele 78V bis 83V**

| **Beispiel** | | **78V** | **79V** | **80V** | **81V** | **82V** | **83V** | **84** |
|---|---|---|---|---|---|---|---|---|
| A-3 | [Gew.-%] | 90,00 | 90,00 | 90,00 | 90,00 | 90,00 | 90,00 | 90,00 |
| A-2 | [Gew.-%] | 10,00 | 6,00 | 5,40 | 5,80 | 5,60 | 5,40 | 5,40 |
| G-1 | [Gew.-%] | - | - | 0,60 | - | - | - | - |
| G-2 | [Gew.-%] | - | - | - | 0,20 | 0,40 | 0,60 | - |
| D | [Gew.-%] | - | - | - | - | - | - | 0,60 |
| C-4 | [Gew.-%] | - | 4,00 | 4,00 | 4,00 | 4,00 | 4,00 | 4,00 |
| **Prüfungen:** | | | | | | | | |
| MVR | [$cm^3$/10 min] | 10,1 | 0,9 | 4,5 | 0,7 | 1,6 | 1,7 | 11,7 |
| IMVR20’ | [$cm^3$/10 min] | 10,0 | 0,9 | 5,3 | 0,8 | 1,7 | 1,7 | 11,6 |
| Vicat VSTB50 | [°C] | 146,8 | 148,3 | 140,3 | 147,1 | 145,3 | 144 | 140,5 |

In Tabelle 3c sind zu der erfindungsgemäßen Zusammensetzung 84 wichtige Eigenschaften angegeben. Dem sind die Vergleichsbeispiele 78V bis 83V, insbesondere 80V und 83V, gegenübergestellt. Aus der Tabelle ist zu erkennen, dass die Zusammensetzungen gemäß den Vergleichsbeispielen, welche keinen Diglycerolester enthalten, deutlich schlechtere Schmelze-Volumenfließraten MVR aufweisen.

## Patentansprüche

1. Zusammensetzung, enthaltend

   A) 20 Gew.-% bis 99,0 Gew.-% aromatisches Polycarbonat,
   B) 0,0 bis 1,0 Gew.-% mindestens eines Flammschutzmittels,
   C) 0,5 Gew.-% bis 50,0 Gew.-% mindestens einer Glasfaser, einer Carbonfaser und/oder Carbon-Nanotubes,
   D) 0,01 Gew.-% bis 3,0 Gew.-% mindestens eines Fließhilfsmittels, ausgewählt aus der Gruppe der Diglycerolester,
   E) 0,0 Gew.-% bis 5,0 Gew.-% mindestens eines Antitropfmittels,
   F) 0,0 Gew.-% bis 1,0 Gew.-% mindestens eines Thermostabilisators,
   G) 0,0 Gew.-% bis 10,0 Gew.-% weitere Additive.

2. Zusammensetzung nach Anspruch 1, **dadurch gekennzeichnet, dass** sich die Komponenten A) bis G) zu 100 Gew.-% ergänzen.

3. Zusammensetzung nach Anspruch 1 oder 2, **dadurch gekennzeichnet, dass** als Diglycerolester ein Ester der Formel (I)

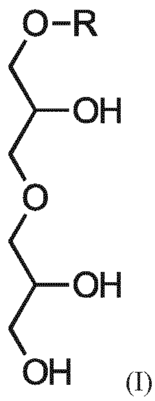

(I)

mit R = $COC_nH_{2n+1}$ und/oder R = COR',
wobei n eine ganze Zahl ist und wobei R' ein verzweigter Alkylrest oder ein verzweigter oder unverzweigter Alkenylrest ist und $C_nH_{2n+1}$ ein aliphatischer, gesättigter linearer Alkylrest ist, enthalten ist.

4. Zusammensetzung nach Anspruch 3, **dadurch gekennzeichnet, dass** R = $COC_nH_{2n+1}$ ist, wobei n eine ganze Zahl von 6-24, bevorzugt 8 bis 18, weiter bevorzugt 10 bis 16, besonders bevorzugt 12 ist.

5. Zusammensetzung nach einem der vorhergehenden Ansprüche, **dadurch gekennzeichnet, dass** als Flammschutzmittel ein Alkali- und/oder Erdalkalisalz einer aliphatischen bzw. aromatischen Sulfonsäure oder eines Sulfonamids enthalten ist.

6. Zusammensetzung nach einem der vorhergehenden Ansprüche, **dadurch gekennzeichnet, dass** mindestens 0,05 Gew.-% eines Antitropfmittels enthalten sind.

7. Zusammensetzung nach einem der vorhergehenden Ansprüche, enthaltend Glasfasern und 0,001 bis 1,0 Gew.-% eines Flammschutzmittels.

8. Zusammensetzung nach einem der vorhergehenden Ansprüche, **dadurch gekennzeichnet, dass** Glasfasern enthalten sind und die Glasfasern eine Länge vor der Compoundierung von 3 mm bis 6 mm aufweisen.

9. Zusammensetzung nach einem der vorhergehenden Ansprüche, **dadurch gekennzeichnet, dass** Glasfasern enthalten sind und die Glasfaser Schnittglasfasern sind.

10. Zusammensetzung nach einem der Ansprüche 1 bis 9, **dadurch gekennzeichnet, dass** Glasfasern enthalten sind und die Glasfasern einen mittleren Faserdurchmesser von 5 bis 25 µm, bevorzugt von 8 bis 20 µm, weiter bevorzugt von 11 bis 17 µm aufweisen.

11. Zusammensetzung nach einem der vorhergehenden Ansprüche, **dadurch gekennzeichnet, dass** die Zusammensetzung eine Schmelze-Volumenfließrate MVR von 7 - 25 $cm^3$/10 min, bestimmt nach ISO 1133 (Prüftemperatur 300°C, Masse 1,2 kg), aufweist und der E-Modul, bestimmt nach ISO 527, mindestens 2700 $kg*m^{-1}*s^{-2}$ beträgt.

12. Zusammensetzung nach einem der Ansprüche 1 bis 7, **dadurch gekennzeichnet, dass** die Zusammensetzung Carbonfasern enthält.

13. Verwendung einer Zusammensetzung nach einem der Ansprüche 1 bis 12 zur Herstellung von dünnwandigen Formteilen der Dicke 0,1 - 3 mm für den Bereich Elektrik/Elektronik oder den IT-Bereich mit einer Brennbarkeitsklasse UL94 V-0 bei 1,5 mm Wandstärke.

14. Verwendung der Zusammensetzung nach einem der Ansprüche 1 bis 12 mit einer Schmelze-Volumenfließrate MVR von 1 - 30 $cm^3$/10 min, bestimmt nach ISO 1133 (Prüftemperatur 300°C, Masse 1,2 kg), und einer Schlagzähigkeit nach Charpy, bestimmt nach DIN EN ISO 179/1eU bei Raumtemperatur, von größer 35 $kJ/m^2$ zur Herstellung von Formteilen, speziell für Bauteile für Ultrabooks.

15. Verwendung von Diglycerolestern zur Verbesserung der Fließfähigkeit von Polycarbonatschmelzen.

## Claims

1. Composition comprising

A) 20 wt% to 99.0 wt% of aromatic polycarbonate,
B) 0.0 to 1.0 wt% of at least one flame retardant,
C) 0.5 wt% to 50.0 wt% of at least one glass fibre, one carbon fibre and/or carbon nanotubes,
D) 0.01 wt% to 3.0 wt% of at least one flow auxiliary selected from the group of diglycerol esters,
E) 0.0 wt% to 5.0 wt% of at least one antidripping agent,
F) 0.0 wt% to 1.0 wt% of at least one thermal stabilizer,
G) 0.0 wt% to 10.0 wt% of further additives.

2. Composition according to Claim 1, **characterized in that** the components A) to G) add up to 100 wt%.

3. Composition according to Claim 1 or 2, **characterized in that** the diglycerol ester content is an ester of formula (I)

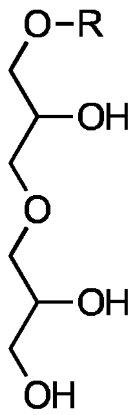

(I)

where R = $COC_nH_{2n+1}$ and/or R = COR',
where n is an integer and where R' is a branched alkyl moiety or a branched or unbranched alkenyl moiety and $C_nH_{2n+1}$ is an aliphatic, saturated linear alkyl moiety.

4. Composition according to Claim 3, **characterized in that** R = $COC_nH_{2n+1}$, where n is an integer from 6-24, preferably from 8 to 18, more preferably from 10 to 16 and yet more preferably 12.

5. Composition according to any of the preceding claims, **characterized in that** the flame retardant present is an alkali and/or alkaline earth metal salt of an aliphatic/aromatic sulphonic acid or of a sulphonamide.

6. Composition according to any of the preceding claims, **characterized in that** at least 0.05 wt% of an antidripping agent is present.

7. Composition according to any of the preceding claims, comprising glass fibres and from 0.001 to 1.0 wt% of a flame retardant.

8. Composition according to any of the preceding claims, **characterized in that** glass fibres are present and the glass fibres have a precompounding length of 3 mm to 6 mm.

9. Composition according to any of the preceding claims, **characterized in that** glass fibres are present and the glass fibres are chopped glass fibres.

10. Composition according to any of Claims 1 to 9, **characterized in that** glass fibres are present and the glass fibres have a mean fibre diameter of 5 to 25 μm, preferably of 8 to 20 μm and more preferably of 11 to 17 μm.

11. Composition according to any of the preceding claims, **characterized in that** the composition has a melt volume flow rate MVR of 7-25 $cm^3$/10 min, determined according to ISO 1133 (test temperature 300°C, mass 1.2 kg) and

the modulus of elasticity, determined according to ISO 527, is at least 2700 $kg*m^{-1}*s^{-2}$.

**12.** Composition according to any of Claims 1 to 7, **characterized in that** the composition comprises carbon fibres.

**13.** Use of a composition according to any of Claims 1 to 12 in the manufacture of thin walled shaped articles having a thickness of 0.1-3 mm for the electrical/electronics sector or the IT sector with a UL94 V-0 flammability rating at 1.5 mm wall thickness.

**14.** Use of the composition according to any of Claims 1 to 12 with a melt volume flow rate MVR of 1-30 $cm^3$/10 min, determined according to ISO 1133 (test temperature 300°C, mass 1.2 kg) and a Charpy impact strength, determined according to DIN EN ISO 179/1eU at room temperature, of above 35 $kJ/m^2$ in the manufacture of shaped articles, specifically for component parts for Ultrabooks.

**15.** Use of diglycerol esters to improve the flowability of polycarbonate melts.

**Revendications**

**1.** Composition contenant

A) 20% en poids à 99,0% en poids de polycarbonate aromatique,
B) 0,0 à 1,0% en poids d'au moins un agent ignifuge,
C) 0,5% en poids à 50,0% en poids d'au moins une fibre de verre, d'une fibre de carbone et/ou de nanotubes de carbone,
D) 0,01% en poids à 3,0% en poids d'au moins un adjuvant d'écoulement, choisi dans le groupe des esters de diglycérol,
E) 0,0% en poids à 5,0% en poids d'au moins un agent anti-gouttes,
F) 0,0% en poids à 1,0% en poids d'au moins un stabilisant thermique,
G) 0,0% en poids à 10,0% en poids d'autres additifs.

**2.** Composition selon la revendication 1, **caractérisée en ce que** les composants A) à G) se complètent à 100% en poids.

**3.** Composition selon la revendication 1 ou 2, **caractérisée en ce qu'**elle contient, comme ester de diglycérol, un ester de formule (I)

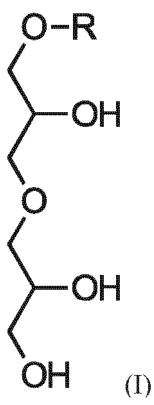
(I)

dans laquelle R = $COC_nH_{2n+1}$ et/ou R = COR',
n représentant un nombre entier et R' représentant un radical alkyle ramifié ou un radical alcényle ramifié ou non ramifié et $C_nH_{2n+1}$ représentant un radical alkyle aliphatique, saturé, linéaire.

**4.** Composition selon la revendication 3, **caractérisée en ce que** R = $COC_nH_{2n+1}$, n représentant un nombre entier de 6-24, de préférence de 8 à 18, plus préférablement de 10 à 16, de manière particulièrement préférée 12.

**5.** Composition selon l'une quelconque des revendications précédentes, **caractérisée en ce qu'**un sel de métal alcalin

et/ou de métal alcalino-terreux d'un acide sulfonique aliphatique ou aromatique ou d'un sulfonamide est contenu comme agent ignifuge.

**6.** Composition selon l'une quelconque des revendications précédentes, **caractérisée en ce qu'**elle contient au moins 0,05% en poids d'un agent anti-gouttes.

**7.** Composition selon l'une quelconque des revendications précédentes, contenant des fibres de verre et 0,001 à 1,0% en poids d'un agent ignifuge.

**8.** Composition selon l'une quelconque des revendications précédentes, **caractérisée en ce qu'**elle contient des fibres de verre et les fibres de verre présentent une longueur de 3 à 6 mm avant le mélange.

**9.** Composition selon l'une quelconque des revendications précédentes, **caractérisée en ce qu'**elle contient des fibres de verre et les fibres de verre sont des fibres de verre coupées.

**10.** Composition selon l'une quelconque des revendications 1 à 9, **caractérisée en ce qu'**elle contient des fibres de verre et les fibres de verre présentent un diamètre moyen de fibre de 5 à 25 $\mu$m, de préférence de 8 à 20 $\mu$m, plus préférablement de 11 à 17 $\mu$m.

**11.** Composition selon l'une quelconque des revendications précédentes, **caractérisée en ce que** la composition présente un indice de fluidité à chaud en volume MVR de 7-25 $cm^3$/10 min, déterminé selon la norme ISO 1133 (température d'essai 300°C, masse 1,2 kg) et le module E, déterminé selon la norme ISO 527, est d'au moins 2700 $kg*m^{-1}s^{-2}$.

**12.** Composition selon l'une quelconque des revendications 1 à 7, **caractérisée en ce que** la composition contient des fibres de carbone.

**13.** Utilisation d'une composition selon l'une quelconque des revendications 1 à 12 pour la fabrication de pièces moulées à paroi mince d'une épaisseur de 0,1-3 mm pour le domaine de l'électricité/électronique ou pour le domaine IT, présentant une classe d'inflammabilité UL94 V-0 à une épaisseur de paroi de 1,5 mm.

**14.** Utilisation de la composition selon l'une quelconque des revendications 1 à 12 présentant un indice de fluidité à chaud en volume MVR de 1-30 $cm^3$/10 min, déterminé selon la norme ISO 1133 (température d'essai 300°C, masse 1,2 kg), et une résistance au choc selon Charpy, déterminée selon la norme DIN EN ISO 179/1eU à température ambiante, supérieure à 35 $kJ/m^2$ pour la fabrication de pièces moulées, en particulier pour des éléments pour Ultrabooks.

**15.** Utilisation d'esters de diglycérol pour l'amélioration de l'aptitude à l'écoulement de masses fondues de polycarbonate.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2013045552 A1
- US 3951903 A
- EP 0063769 A2
- JP 2011108435 A
- JP 2010150457 A
- JP 2010150458 A
- JP 2009292962 A
- JP 2011256359 A
- US 3028635 A
- US 2999825 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 61105550 A
- EP 0839623 A
- WO 9615102 A
- EP 0500496 A

### In der Beschreibung aufgeführte Nicht-Patentliteratur

- Chemistry and Physics of Polycarbonates. **SCHNELL.** Polymer Reviews. Interscience Publishers, 1964, vol. 9
- Polycarbonates. **D. FREITAG ; U. GRIGO ; P.R. MÜLLER ; H. NOUVERTNE ; BAYER AG.** Encyclopedia of Polymer Science and Engineering. 1988, vol. 11, 648-718
- Polycarbonate'' in Becker/Braun, Kunststoff-Handbuch. **U. GRIGO ; K. KIRCHNER ; P.R. MÜLLER.** Polycarbonate, Polyacetale, Polyester, Celluloseester. Carl Hanser Verlag, 1992, vol. 3/1, 117-299
- H. Schnell, Chemistry and Physics of Polycarbonates. Interscience Publishers, 1964
- *CHEMICAL ABSTRACTS,* 29420-49-3
- *CHEMICAL ABSTRACTS,* 9002-84-0
- *CHEMICAL ABSTRACTS,* 25852-37-3
- **HANS ZWEIFEL.** Plastics Additives Handbook. Hanser Verlag, 2000
- *CHEMICAL ABSTRACTS,* 23949-66-8